# EUROPEAN PATENT APPLICATION

(11) **EP 4 714 735 A1**
(43) Date of publication of application: **25.03.2026**
(21) Application number: 24806261.4
(22) Date of filing: 17.04.2024
(51) Int. Cl.: B60N 2/07, B60N 2/12, B60N 2/30

(54) **VEHICLE SEAT FRAME**

(30) Priority: 17.05.2023 CN 202321190786 U; 23.10.2023 CN 202322842450 U
(71) Applicant: Yanfeng International Automotive Technology Co., Ltd., Shanghai 201306 (CN)
(72) Inventor: SHEN, Chunlei, Shanghai 201306 (CN); WANG, Jingyang, Shanghai 201306 (CN); WANG, Yuju, Shanghai 201306 (CN); SHI, Huijie, Shanghai 201306 (CN); LU, Xufeng, Shanghai 201306 (CN)
(74) Representative: Colombo, Stefano Paolo
(86) International application number: PCT/CN2024/088153
(87) International publication number: WO 2024/234904

(57) **Abstract**

The present application relates to a vehicle seat frame, in particular a vehicle rear seat frame, wherein the vehicle seat frame comprises a seat frame body, a sliding adjustment assembly and a flipping assembly; wherein the sliding adjustment assembly is mounted on a vehicle body, wherein the seat frame body is mounted on the sliding adjustment assembly via the flipping assembly, so that the seat frame body is slidably and flipably mounted on the vehicle body. The vehicle seat frame of the present application can solve the problems in the prior art that the vehicle rear seat frame has no adjustment function and is prone to accidental triggering of flipping.

## Description

Cross-Reference to Related Applications: The present application is based on the applications with CN Application No. 202321190786.9 filed on May 17, 2023 and CN Application No. 202322842450.2 filed on October 23, 2023, and claims priority thereto. The disclosures of the said CN applications are incorporated herein in their entireties.

### Technical Field

The present application relates to the field of vehicle seats, in particular to a vehicle seat frame, and more particularly to a vehicle rear seat frame.

### Background of Invention

A vehicle seat, especially an automobile seat, consists of a seat frame, foam, a cover, etc., wherein the seat frame is used to form the structure of the entire seat and play a role in installation and load-bearing. According to the installation position, seat frames are divided into a driver's seat frame and a passenger's seat frame located in the front row in the vehicle traveling direction, and a rear seat frame located in the rear row in the vehicle traveling direction. In existing vehicle models, the seat frame of the front row usually has a front-rear sliding adjustment function, while the rear seat frame is usually fixedly installed, that is, the rear seat does not have an adjustment function, which is not conducive to the utilization of the space at the rear of the vehicle and also reduces the riding comfort of the vehicle to a certain extent.

Chinese Utility Model Patent No. CN217705560U discloses an electric flipping mechanism for an automobile rear seat. Chinese Utility Model Patent No. CN206606081U discloses a hidden automobile seat flipping foot structure. Chinese Invention Patent No. CN103429460B discloses a vehicle seat storage device. Chinese Invention Patent No. CN102481871B discloses a storage device for a vehicle seat. The rear seat frames of the above patents can be flipped manually or electrically controlled to realize the function of flipping into a recess, so as to expand the available space at the rear of the vehicle. However, none of the above patents mention or realize the technical defect existing in the vehicle seat frames in the prior art: the occupant may mistakenly trigger the seat flipping function due to operational errors, etc., which will affect the use safety of the rear seat.

Therefore, it is necessary to provide a vehicle seat frame, especially a vehicle rear seat frame, which can solve the problems in the prior art that the vehicle seat frame, especially the vehicle rear seat frame, lacks an adjustment function and is prone to accidental triggering of flipping.

### Summary of Invention

In view of the above situation, the present application provides a vehicle seat frame, especially a vehicle rear seat frame, which can overcome at least one defect of the vehicle seat frames in the prior art. In particular, the vehicle seat frame, especially the vehicle rear seat frame, of the present application can solve the problems in the prior art that the vehicle seat frame, especially the vehicle rear seat frame, has no adjustment function and is prone to accidental triggering of flipping.

To achieve the above object, the technical solution adopted by the present application is: a vehicle seat frame, especially a vehicle rear seat frame, comprising a seat frame body, a sliding adjustment assembly and a flipping assembly; wherein the sliding adjustment assembly is mounted on a vehicle body, wherein the seat frame body is mounted on the sliding adjustment assembly via the flipping assembly, so that the seat frame body is slidably and flipably mounted on the vehicle body.

In the present application, it is configured such that, a vehicle rear seat can be understood as a seat close to the rear of the vehicle or located at the rear in the normal traveling state of the vehicle, and a vehicle front seat can be understood as a seat close to the vehicle head or located at the front in the normal traveling state of the vehicle. Similarly, "rear", such as "rear part", "rear side", "rear end" and "backward", can be correspondingly understood as the direction close to the rear of the vehicle or the direction located at the rear in the normal traveling state of the vehicle, and "front", such as "front part", "front side", "front end" and "forward", can be correspondingly understood as the direction close to the vehicle head or the direction located at the front in the normal traveling state of the vehicle.

In some embodiments of the present application, the sliding adjustment assembly comprises an upper slide rail and a lower slide rail; wherein the lower slide rail is fixedly mounted on the vehicle body, especially via a lower bracket, wherein the upper slide rail is slidably mounted on the lower slide rail; wherein the seat frame body is mounted on the upper slide rail via the flipping assembly, especially flipably mounted on the upper slide rail, enabling the seat frame body to slide along the lower slide rail through the upper slide rail.

In some embodiments of the present application, the flipping assembly comprises a lower connecting plate, a rear rotating shaft and an upper connecting plate; wherein the lower connecting plate is fixedly mounted on the upper slide rail, especially the rear part of the upper slide rail, wherein the upper connecting plate is fixedly mounted at the bottom of the seat frame body, especially the rear side of the bottom, wherein the upper connecting plate is rotatably connected to the lower connecting plate via the rear rotating shaft, so that the seat frame body is flipably mounted on the upper slide rail through the flipping assembly.

In some embodiments of the present application, the flipping assembly further comprises an electric driving member, wherein the upper connecting plate is rotatably connected to the lower connecting plate through the rear rotating shaft via the electric driving member.

In some embodiments of the present application, the electric driving member comprises a driving member body, a toothed plate and a gear; wherein the driving member body is fixedly mounted on the lower connecting plate, wherein the gear is fixedly mounted on an output shaft of the driving member body; wherein the toothed plate is fixedly connected to the rear rotating shaft, wherein the rear rotating shaft is fixedly mounted on the upper connecting plate, wherein the gear is meshingly connected to the toothed plate.

In some embodiments of the present application, the toothed plate is of a sector-shaped toothed plate structure, wherein the sector-shaped toothed plate structure has an arc segment, wherein outer peripheral teeth are distributed on the arc segment, wherein the meshing teeth of the outer peripheral teeth located at both ends thereof are used as driving stop points.

In some embodiments of the present application, the flipping assembly further comprises a bidirectional assist mechanism, wherein the upper connecting plate is rotatably connected to the lower connecting plate through the rear rotating shaft via the bidirectional assist mechanism.

In some embodiments of the present application, the bidirectional assist mechanism comprises a first assist coil spring and a second assist coil spring, wherein the first assist coil spring and the second assist coil spring are mounted on the rear rotating shaft in opposite directions, such that when the rear rotating shaft rotates clockwise, the first assist coil spring generates torque to assist the flipping of the seat frame body into a recess; and when the rear rotating shaft rotates counterclockwise, the second assist coil spring generates torque to assist the flipping of the seat frame body out of the recess.

In some embodiments of the present application, inner rings of the first assist coil spring and the second assist coil spring are coaxially mounted on the rear rotating shaft; wherein the lower connecting plate comprises a lower connecting plate inner side plate and a lower connecting plate outer side plate, wherein outer rings of the first assist coil spring and the second assist coil spring are respectively mounted at intervals between the lower connecting plate inner side plate and the lower connecting plate outer side plate.

In some embodiments of the present application, a front foot lock is mounted on the front side of the bottom of the seat frame body, wherein a latch is fixedly mounted on the front part of the upper slide rail, wherein the front foot lock can be buckled onto the latch in a matching manner when the seat frame body is in a non-flipped state.

In some embodiments of the present application, the front foot lock is rotatably mounted on the seat frame body via a fourth force-accumulating rotating member, and can be flipped relative to the seat frame body around the fourth force-accumulating rotating member via a foot retracting mechanism.

In some embodiments of the present application, the foot retracting mechanism comprises a winding rotating shaft, a foot retracting cable and a cable guide pulley; wherein the cable guide pulley is mounted on the seat frame body; wherein a first cable fixing point is formed on the upper part of the front foot lock, wherein a second cable fixing point is formed on the lower connecting plate, wherein the winding rotating shaft is mounted on the lower connecting plate and fixedly connected coaxially to the rear rotating shaft; wherein a front end of the foot retracting cable is fixedly connected to the first cable fixing point after passing around the cable guide pulley, wherein a rear end of the foot retracting cable is fixedly connected to the second cable fixing point after being wound around the winding rotating shaft.

In some embodiments of the present application, the fourth force-accumulating rotating member is located between the cable guide pulley and the first cable fixing point, and wherein the fourth force-accumulating rotating member, the cable guide pulley and the first cable fixing point form three vertices of a triangle.

In some embodiments of the present application, the vehicle seat frame further comprises an anti-misoperation assembly, which is connected to the seat frame body and the sliding adjustment assembly in an interlocking manner, such that the seat frame body can be flipped into the recess via the flipping assembly only at a flipping trigger end of the sliding adjustment assembly.

In some embodiments of the present application, the anti-misoperation assembly comprises a handle, a handle cable and a front foot lock unlocking cable; wherein the handle is fixedly mounted on the vehicle body, wherein one end of the handle cable is connected to the handle, wherein the front foot lock unlocking cable is connected between the other end of the handle cable and the front foot lock, in particular, a pair of front foot lock unlocking cables are respectively connected between the other end of the handle cable and a corresponding one of the pair of front foot locks.

In some embodiments of the present application, the anti-misoperation assembly further comprises a locking control cable, a triggering mechanism and a locking execution mechanism; in particular, the handle and the locking execution mechanism are respectively fixedly mounted on the vehicle body, wherein the handle cable is connected between the handle and a first cable end of the locking execution mechanism; wherein the triggering mechanism is mounted on the lower slide rail, enabling the upper slide rail sliding to the flipping trigger end of the lower slide rail to abut against the triggering mechanism, wherein the locking control cable is connected between a second cable end of the locking execution mechanism and a fourth cable end of the triggering mechanism; wherein the front foot lock unlocking cable is connected between a third cable end of the locking execution mechanism and the front foot lock, in particular, a pair of front foot lock unlocking cables are respectively connected between the third cable end of the locking execution mechanism and the pair of front foot locks.

In some embodiments of the present application, the triggering mechanism comprises a triggering lever and a first force-accumulating rotating member; wherein the triggering lever is rotatably mounted on the lower slide rail via the first force-accumulating rotating member; wherein one end of the triggering lever serves as a triggering part and extends to the side of the upper slide rail, wherein a triggering protrusion is formed on the upper slide rail, wherein the triggering protrusion can abut against the triggering part when the upper slide rail slides to the flipping trigger end of the lower slide rail; wherein the other end of the triggering lever serves as the fourth cable end and is connected to the locking control cable

In some embodiments of the present application, the locking execution mechanism comprises an adapter plate, a second force-accumulating rotating member, a rotating baffle and a third force-accumulating rotating member; wherein the middle part of the adapter plate is mounted on the locking execution mechanism via the second force-accumulating rotating member, wherein one end of the adapter plate serves as the first cable end and is connected to the handle cable, wherein the other end of the adapter plate serves as the third cable end and is connected to the front foot lock unlocking cable, wherein a rotating protrusion is formed on the adapter plate; wherein one end of the rotating baffle is rotatably mounted on the locking execution mechanism via the third force-accumulating rotating member, wherein the other end of the rotating baffle serves as the second cable end and is connected to the locking control cable; wherein when the upper slide rail is located at a non-flipping trigger end of the lower slide rail, the rotating protrusion abuts against the second cable end; wherein when the upper slide rail is located at the flipping trigger end of the lower slide rail, the rotating protrusion is not in contact with the second cable end.

In some embodiments of the present application, when the upper slide rail is located at a non-flipping trigger end of the lower slide rail, the rotating protrusion abuts against the second cable end which forms a stop for it, wherein when the upper slide rail is located at the flipping trigger end of the lower slide rail, the rotating protrusion is not in contact with the second cable end.

In some embodiments of the present application, the flipping trigger end is an end of the lower slide rail close to the rear of the vehicle.

In some embodiments of the present application, an unlocking driving assembly is mounted on the vehicle body, wherein the unlocking driving assembly is connected to the front foot lock.

In some embodiments of the present application, the unlocking driving assembly comprises an unlocking driving member and an electric unlocking cable; in particular, the unlocking driving member is mounted on the vehicle body, wherein one end of the electric unlocking cable is connected to the front foot lock, wherein the other end of the electric unlocking cable is connected to the unlocking driving member, in particular, one ends of a pair of electric unlocking cables are respectively connected to the pair of front foot locks, wherein the other ends of the pair of electric unlocking cables are connected to the unlocking driving member.

In some embodiments of the present application, the unlocking driving member is configured as a motor with forward and reverse rotation functions, wherein when the motor is started to rotate forward, it pulls the electric unlocking cable, which transmits the pulling action to the front foot lock, thereby realizing the unlocking of the front foot lock; and wherein when the motor is started to rotate reversely, it releases the electric unlocking cable, thereby buckling and locking the front foot lock to the latch.

In some embodiments of the present application, a baffle is provided on the front foot lock, wherein a limiting sliding groove is mounted on the vehicle body, wherein the limiting sliding groove extends above the upper slide rail, enabling an end of the baffle to slidably extend into a sliding gap between the limiting sliding groove and the upper slide rail.

The present application also relates to a vehicle, comprising the above-mentioned vehicle seat frame.

Compared with the prior art, the present application can have some or all of the following beneficial effects due to the adoption of the above technical solutions:
(1) In some embodiments of the present application, due to the provision of the sliding adjustment assembly, the lower slide rail is mounted on the vehicle body, the entire seat frame body is mounted on the upper slide rail, and the upper slide rail can drive the seat frame body to slide along the lower slide rail, thereby realizing the front-rear sliding adjustment function of the vehicle rear seat, better utilizing the space at the rear of the vehicle, and improving riding comfort.
(2) In some embodiments of the present application, due to the provision of the flipping assembly, the seat frame body can be flipped backward into the recess or forward out of the recess via the rear rotating shaft. In some embodiments, bidirectional flipping assistance for the seat frame body can be realized through the first assist coil spring and the second assist coil spring, improving the convenience and ease of manual flipping into the recess and flipping out of the recess of the vehicle rear seat. In some embodiments, electric unlocking of the front foot lock of the vehicle rear seat as well as electric flipping into the recess and flipping out of the recess can also be realized through motor drive and other electric methods, saving time and effort.
(3) In some embodiments of the present application, the front foot lock is pulled and rotated under control via the foot retracting mechanism, enabling the front foot lock to be completely accommodated into the seat frame body, thereby ensuring the surface flatness of the seat frame body after being flipped into the recess, which is conducive to the full utilization of the internal space of the vehicle, especially the rear space.
(4) In some embodiments of the present application, due to the provision of the anti-misoperation assembly, through the pressing trigger of the triggering part of the triggering mechanism by the upper slide rail, the action is transmitted to the locking execution mechanism via the locking control cable, and the locking of the locking execution mechanism is released, so that the front foot lock can be rotated and unlocked by pulling the handle, realizing the function of flipping the vehicle rear seat into the recess only at the sliding flipping trigger end, avoiding accidental flipping of the vehicle rear seat during normal use or sliding, achieving the effect of anti-misoperation, and improving the use safety of the vehicle.
(5) In some embodiments of the present application, an unlocking driving assembly is mounted, wherein the unlocking driving assembly is connected to the front foot lock to electrically unlock the front foot lock. The unlocking driving assembly may include a motor, wherein the electric unlocking of the pair of front foot locks is electrically controlled via the motor. Thus, the mistaken triggering of the flipping of the seat frame body can be prevented by the start and stop of the motor, thereby improving control accuracy and safety.
(6) In some embodiments of the present application, the baffle on the front foot lock and the limiting sliding groove on the vehicle body can also be used to avoid flipping of the seat frame body at the non-flipping into the recess position. According to the sliding range of the seat frame body and its recess entry position, the baffle and the limiting sliding groove of an appropriate length are mounted at corresponding positions to ensure that the limiting sliding groove can perform sliding limiting on the baffle within the sliding range when not entering the recess.

The technical features mentioned above, the technical features to be mentioned below, and the technical features shown individually in the accompanying drawings can be arbitrarily combined with each other as long as the combined technical features are not contradictory to each other. All feasible combinations of features are the technical content explicitly recorded herein. Any sub-feature among multiple sub-features included in the same sentence can be applied independently without necessarily being applied together with other sub-features.

### Brief Description of Drawings

Now, the present application will be described in more detail with reference to the schematic accompanying drawings and by means of exemplary embodiments.
Fig. 1 is a perspective view of a vehicle rear seat frame according to some embodiments of the present application;
Fig. 2 is a perspective view of the vehicle rear seat frame according to some embodiments of the present application (the seat frame body is not shown);
Fig. 3 is a schematic diagram of the front structure of the sliding adjustment assembly in the vehicle rear seat frame according to some embodiments of the present application;
Fig. 4 is a schematic diagram of the rear structure of the sliding adjustment assembly in the vehicle rear seat frame according to some embodiments of the present application;
Fig. 5 is a schematic diagram of the flipping process of the seat frame body in the vehicle rear seat frame according to some embodiments of the present application;
Fig. 6 is a schematic diagram of the seat frame body in the vehicle rear seat frame being flipped into a recess according to some embodiments of the present application;
Fig. 7 is a schematic structural diagram of the foot retracting mechanism in the vehicle rear seat frame according to some embodiments of the present application;

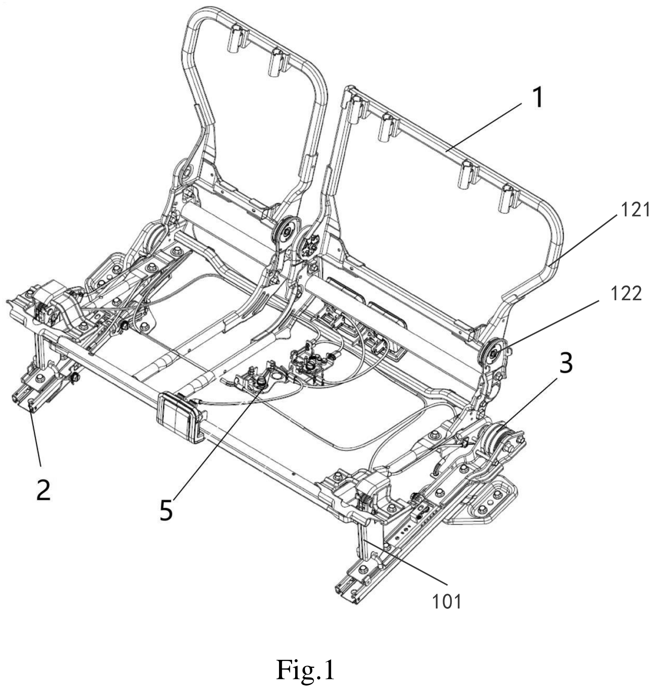

Figs. 1 to 7 all show manually unlockable vehicle rear seat frames according to some embodiments of the present application;

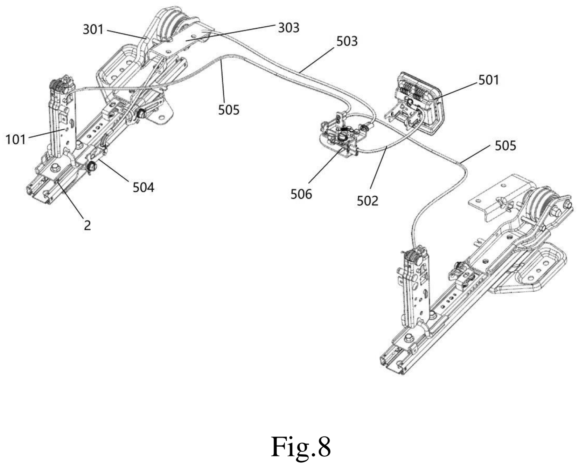

Fig. 8 is a perspective view of the anti-misoperation assembly in the vehicle rear seat frame according to some embodiments of the present application;

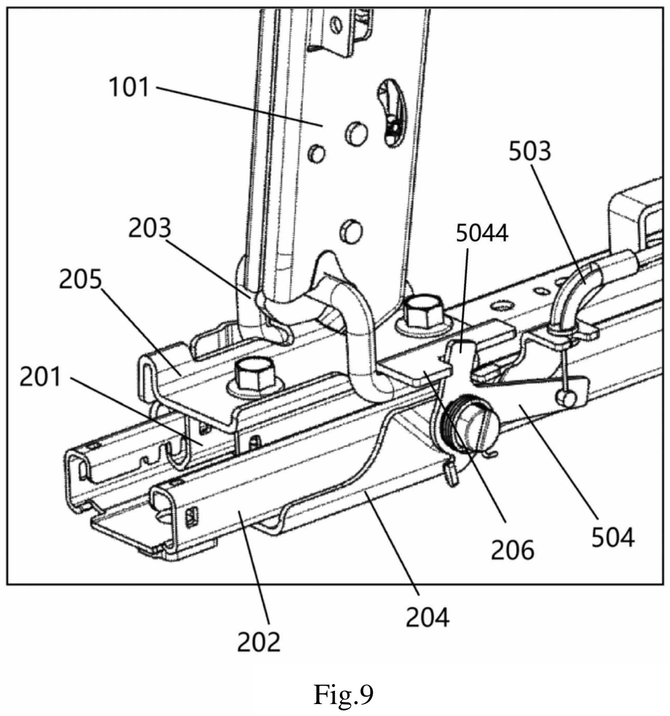

Fig. 9 is a perspective view of the triggering mechanism in the vehicle rear seat frame according to some embodiments of the present application;

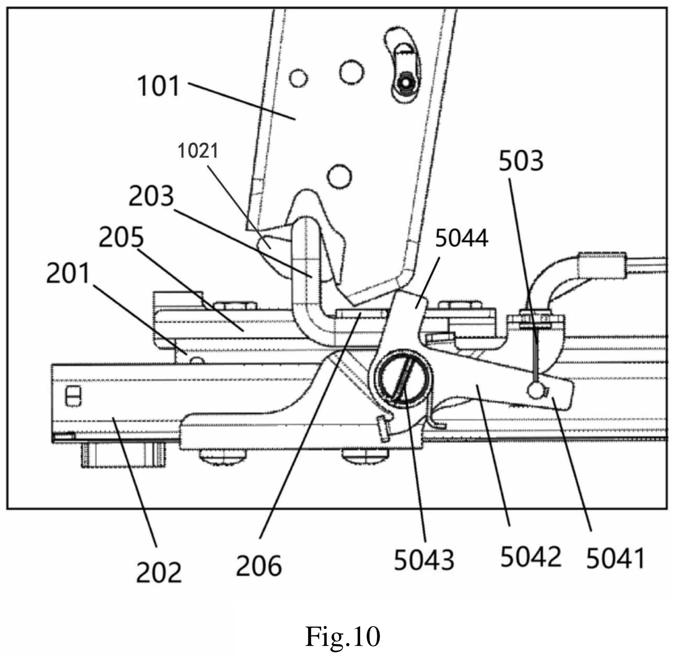

Fig. 10 is a front view of the triggering mechanism in the vehicle rear seat frame according to some embodiments of the present application (the fourth cable end is located at the lowest position);

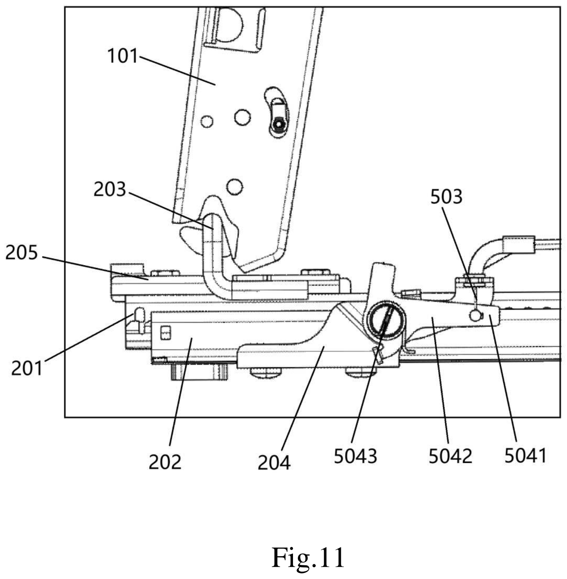

Fig. 11 is a front view of the triggering mechanism in the vehicle rear seat frame according to some embodiments of the present application (the fourth cable end is located at the highest position);

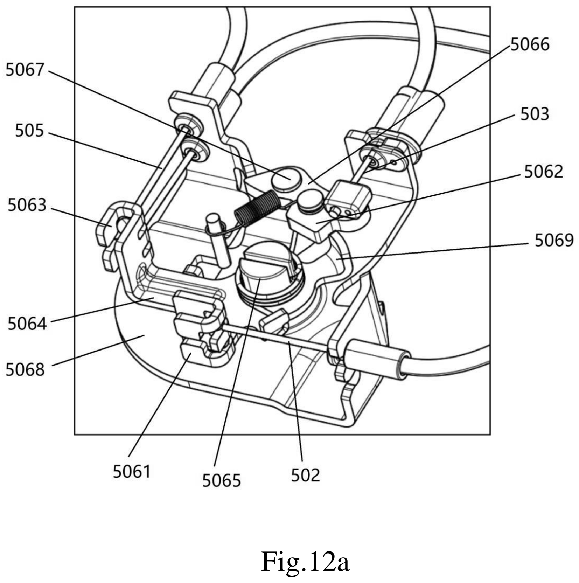

Fig. 12a is a perspective view of the locking execution mechanism in the vehicle rear seat frame according to some embodiments of the present application (locked state);

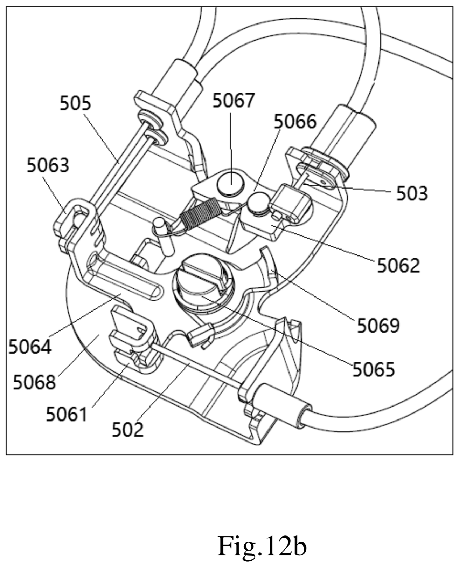

Fig. 12b is a perspective view of the locking execution mechanism in the vehicle rear seat frame according to some embodiments of the present application (unlocked state);

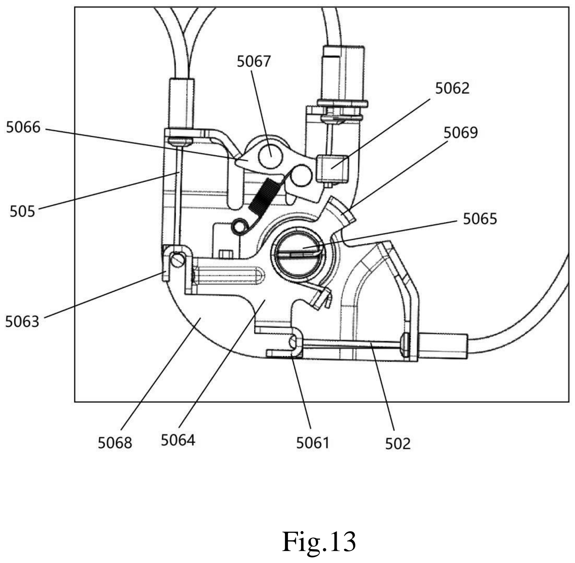

Fig. 13 is a front view of the locking execution mechanism in the vehicle rear seat frame according to some embodiments of the present application;

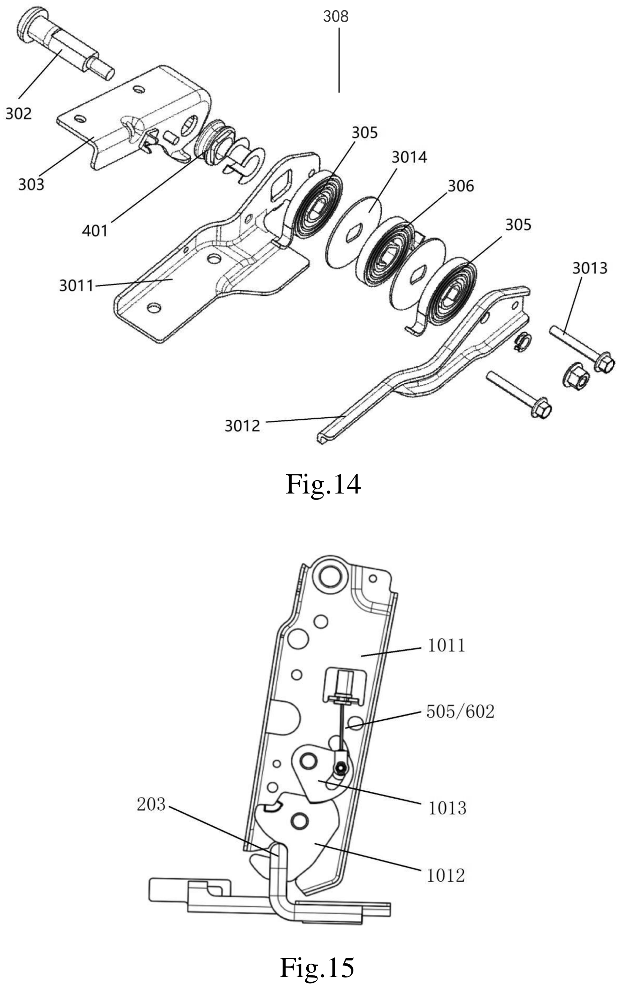

Fig. 14 is an exploded schematic diagram of the bidirectional assist mechanism in the vehicle rear seat frame according to some embodiments of the present application;
Fig. 15 is a locked state diagram of the front foot lock in the vehicle rear seat frame according to some embodiments of the present application;

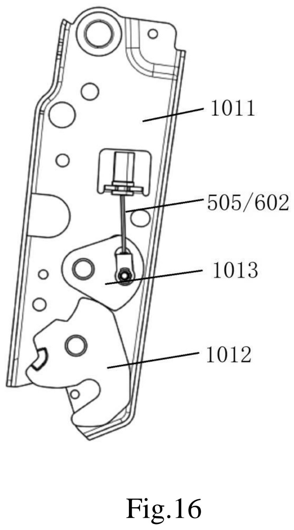

Fig. 16 is an unlocked state diagram of the front foot lock in the vehicle rear seat frame according to some embodiments of the present application;

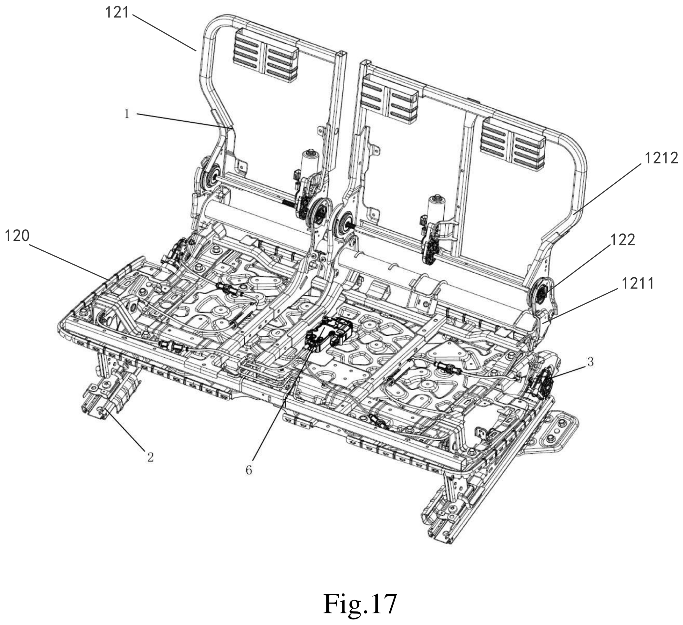

Fig. 17 is a perspective view of the vehicle rear seat frame according to some embodiments of the present application;

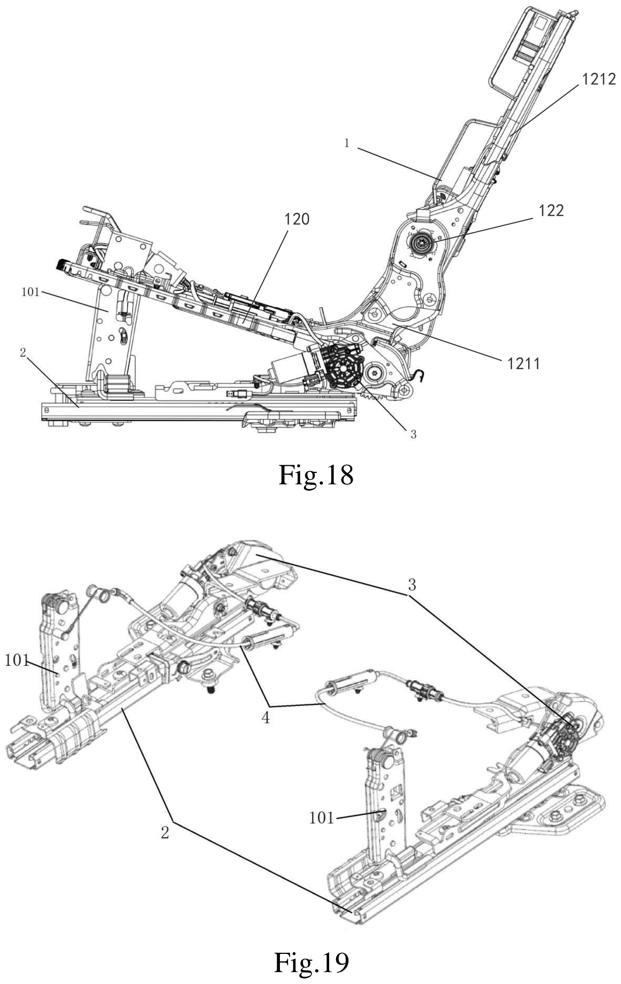

Fig. 18 is a side view of the vehicle rear seat frame according to some embodiments of the present application;
Fig. 19 is a perspective view of the vehicle rear seat frame according to some embodiments of the present application (the seat frame body is not shown);

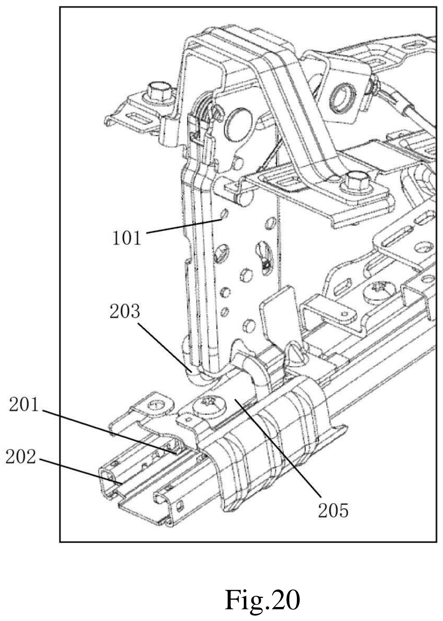

Fig. 20 is a schematic diagram of the front structure of the sliding adjustment assembly in the vehicle rear seat frame according to some embodiments of the present application;

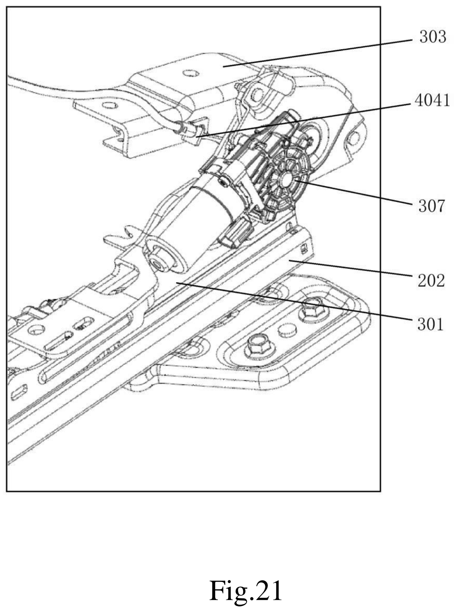

Fig. 21 is a schematic diagram of the rear structure of the sliding adjustment assembly in the vehicle rear seat frame according to some embodiments of the present application;

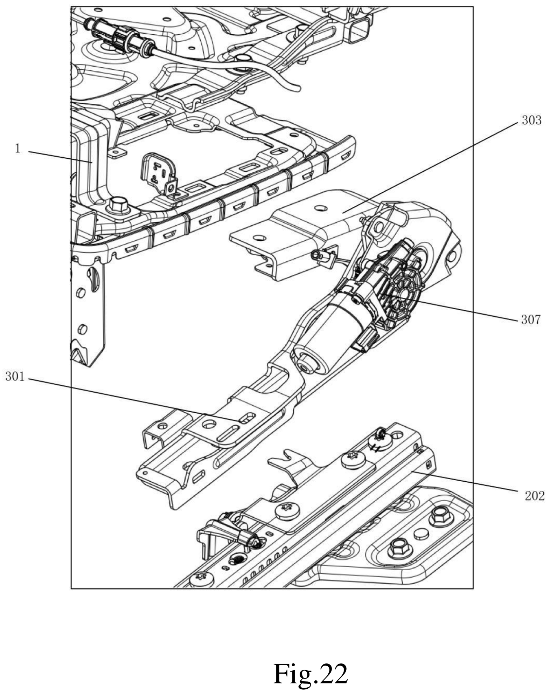

Fig. 22 is an exploded view of the vehicle rear seat frame according to some embodiments of the present application;

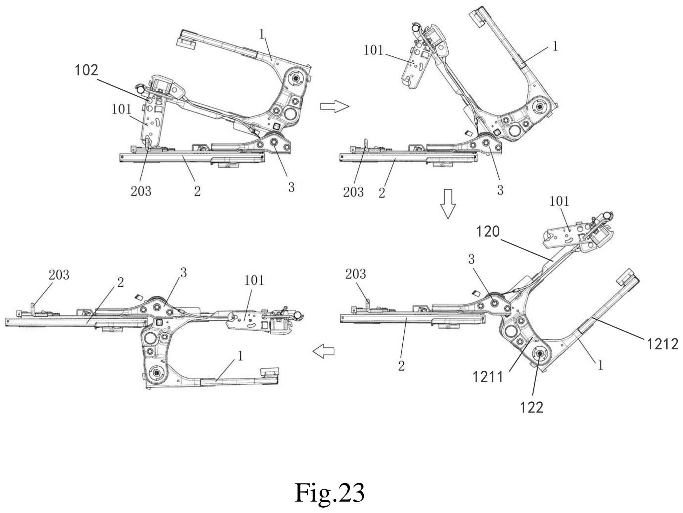

Fig. 23 is a process diagram of the vehicle rear seat frame being flipped into a recess according to some embodiments of the present application;
Figs. 17 to 23 all show electrically unlockable vehicle rear seat frames according to some embodiments of the present application;

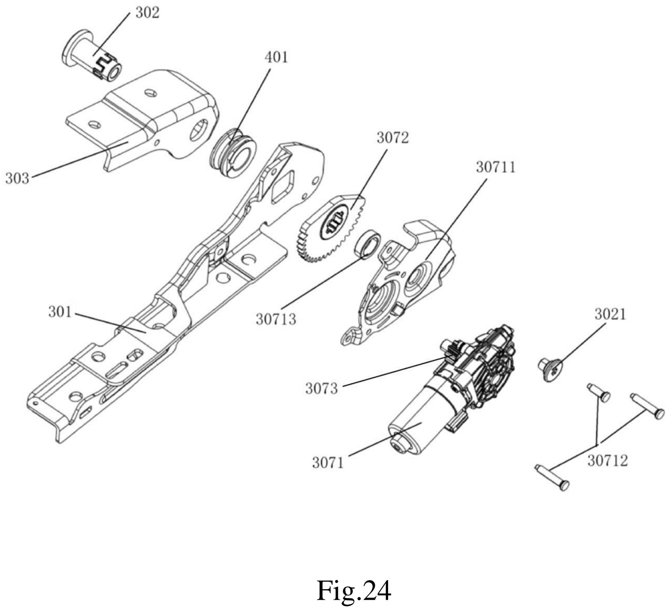

Fig. 24 is an exploded schematic diagram of the electric driving member in the vehicle rear seat frame according to some embodiments of the present application;

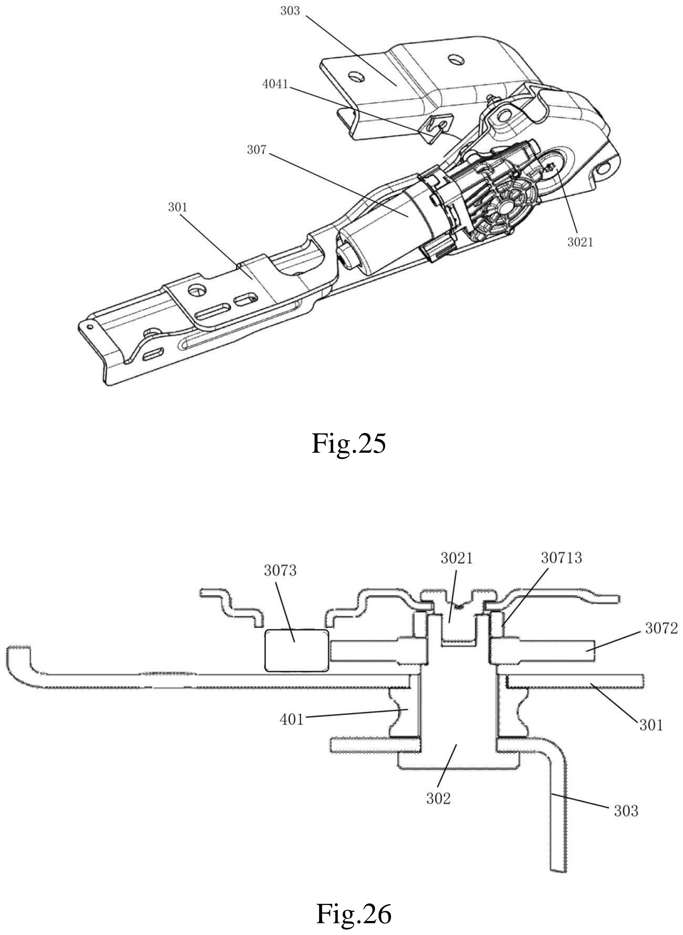

Fig. 25 is a perspective view of the installation of the electric driving member in the vehicle rear seat frame according to some embodiments of the present application;
Fig. 26 is a cross-sectional view of the installation of the electric driving member in the vehicle rear seat frame according to some embodiments of the present application;

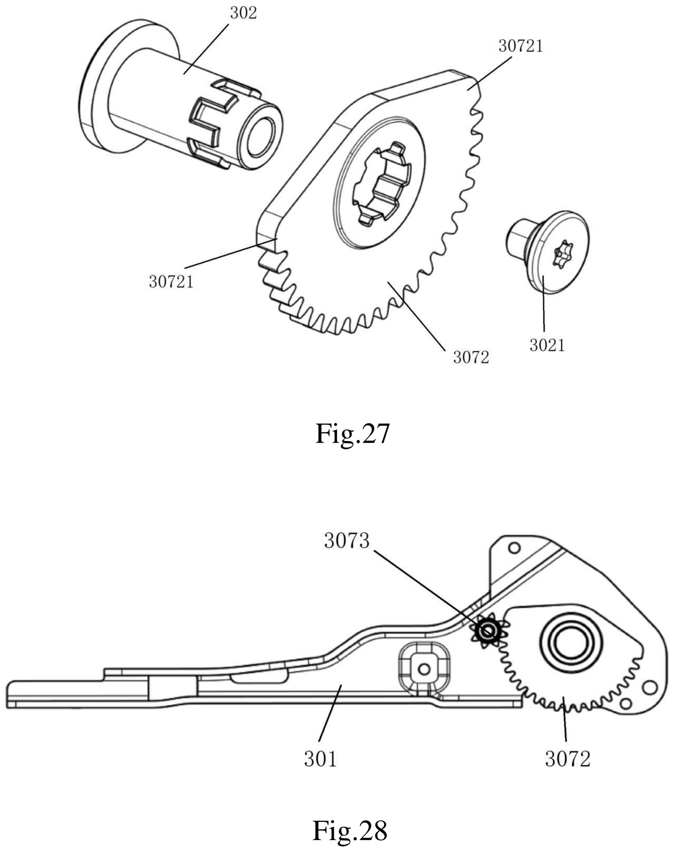

Fig. 27 is an exploded view of the assembly of the rear rotating shaft and the toothed plate in the vehicle rear seat frame according to some embodiments of the present application;
Fig. 28 is a schematic diagram of the assembly of the gear and the toothed plate in the vehicle rear seat frame according to some embodiments of the present application;

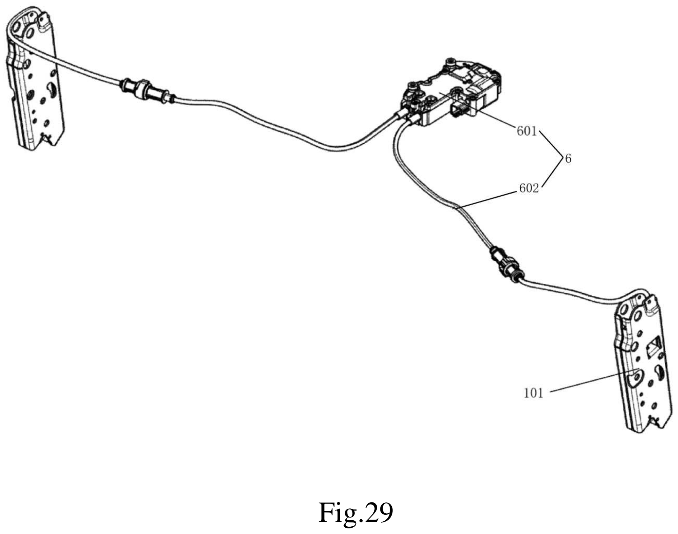

Fig. 29 is a perspective view of the unlocking driving assembly in the vehicle rear seat frame according to some embodiments of the present application;

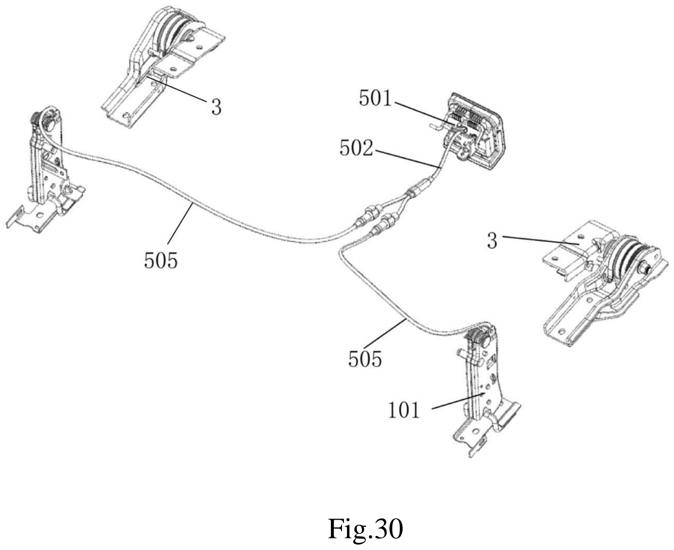

Fig. 30 is a perspective view of a simplified anti-misoperation assembly in the vehicle rear seat frame according to some embodiments of the present application;

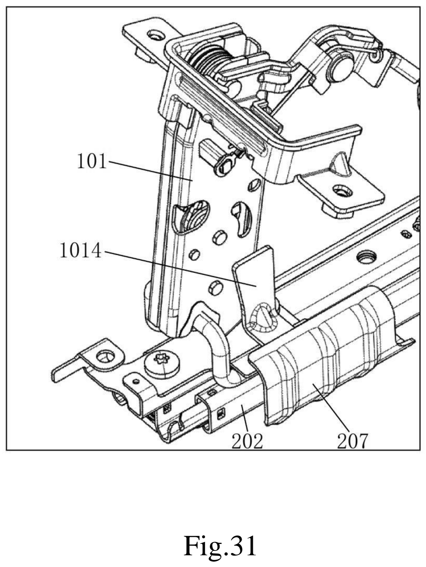

Fig. 31 is a schematic diagram of the installation of the baffle and the limiting sliding groove in the vehicle rear seat frame according to some embodiments of the present application (non-recess entry position);

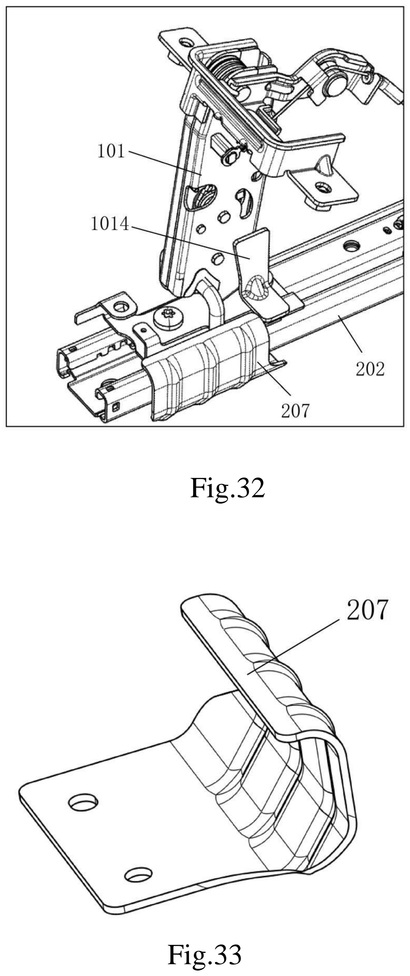

Fig. 32 is a schematic diagram of the installation of the baffle and the limiting sliding groove in the vehicle rear seat frame according to some embodiments of the present application (recess entry position);
Fig. 33 is a perspective view of the limiting sliding groove in the vehicle rear seat frame according to some embodiments of the present application (one side view);

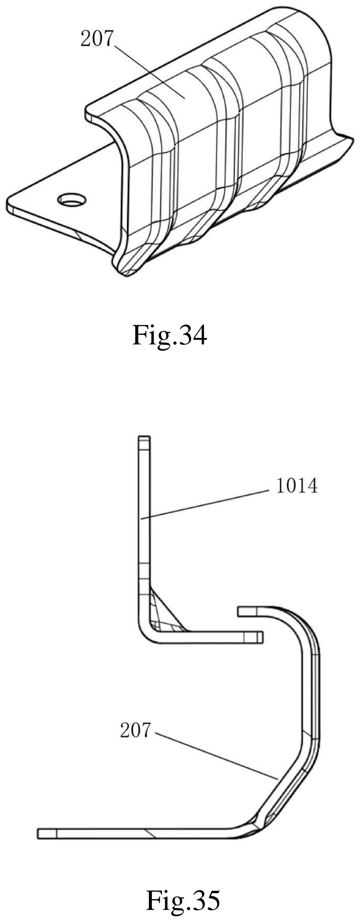

Fig. 34 is a perspective view of the limiting sliding groove in the vehicle rear seat frame according to some embodiments of the present application (the other side view);
Fig. 35 is a limiting schematic diagram of the baffle and the limiting sliding groove in the vehicle rear seat frame according to some embodiments of the present application.

The corresponding relationship between reference numerals and components is as follows:
1 Seat frame body, 101 Front foot lock, 1011 Foot lock, 1012 Lock catch, 1013 Sector-shaped stop block, 1014 Baffle, 1021 Lock tongue, 102 Fourth force-accumulating rotating member, 103 First cable fixing point, 110 Recess, 120 Bottom part, 121 Backrest part, 1211 First section, 1212 Second section, 122 Pivot shaft, 2 Sliding adjustment assembly, 201 Upper slide rail, 202 Lower slide rail, 203 Latch, 204 Lower bracket, 205 Upper bracket, 206 Triggering protrusion, 207 Limiting sliding groove, 3 Flipping assembly, 301 Lower connecting plate, 3011 Lower connecting plate inner side plate, 3012 Lower connecting plate outer side plate, 3013 Spring hanging bolt, 3014 Sound insulation pad, 302 Rear rotating shaft, 3021 Rotating shaft fixing screw, 303 Upper connecting plate, 304 Second cable fixing point, 305 First assist coil spring, 306 Second assist coil spring, 307 Electric driving member, 3071 Driving member body, 30711 Fixing bracket, 30712 Bracket fixing bolt, 30713 Bushing, 3072 Toothed plate, 30721 Drive stop, 3073 Gear, 308 Bidirectional assist mechanism, 4 Foot retracting mechanism, 401 Winding rotating shaft, 402 Foot retracting cable, 403 Cable guide pulley, 404 Cable protection sleeve, 4041 Cable hanging point, 5 Anti-misoperation assembly, 501 Handle, 502 Handle cable, 503 Locking control cable, 504 Triggering mechanism, 5041 Fourth cable end, 5042 Triggering lever, 5043 First force-accumulating rotating member, 5044 Triggering part, 505 Front foot lock unlocking cable, 506 Locking execution mechanism, 5061 First cable end, 5062 Second cable end, 5063 Third cable end, 5064 Adapter plate, 5065 Second force-accumulating rotating member, 5066 Rotating baffle, 5067 Third force-accumulating rotating member, 5068 Mounting plate, 5069 Rotating protrusion, 6 Unlocking driving assembly, 601 Unlocking driving member, 602 Electric unlocking cable.

### Detailed Description of Drawings

To facilitate understanding of the present application, the following description is provided in conjunction with the accompanying drawings and embodiments. In the present application, the technical solution is mainly described by taking a vehicle rear seat frame as an example. However, it should be understood that the following description can be appropriately applied to any type of seat, especially vehicle seats and their frames, such as vehicle front and/or middle row seats and their frames.

### Embodiment 1

Referring to FIGS. 1, 2, 17, and 18, the present application discloses a vehicle seat frame, especially a vehicle rear seat frame. The vehicle seat frame includes a seat frame body 1, a sliding adjustment assembly 2, and a flipping assembly 3. The sliding adjustment assembly 2 is mounted on the vehicle body. The seat frame body 1 is mounted on the sliding adjustment assembly 2 through the flipping assembly 3, so that the seat frame body 1 is slidably and flipably mounted on the vehicle body.

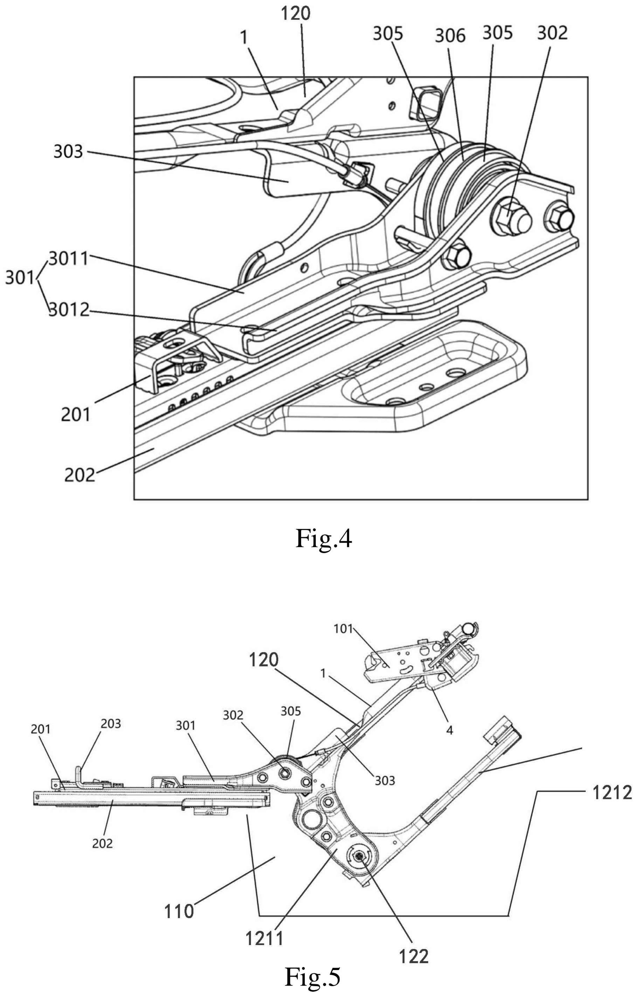

Referring to FIGS. 1, 5, 6, and 23, the seat frame body 1 may include a bottom part 120 and a backrest part 121. The backrest part 121 may include a first section 1211 and a second section 1212 that are pivotable relative to each other via a pivot shaft 122. Thus, when the seat frame body 1 needs to be flipped into a recess 110, the second section 1212 can pivot toward the bottom part 120 to reduce the space occupied by the seat frame body 1 and thereby reduce the space of the recess 110 for accommodating the seat frame body 1. In particular, the second section 1212 may pivot toward the bottom part 120 such that the second section 1212 is substantially parallel to the bottom part 120, as shown in FIGS. 5, 6, and 23.

The seat frame body 1 is mounted on the sliding adjustment assembly 2, so the front-back sliding of the seat frame body 1 relative to the vehicle body (e.g., sliding toward or away from the vehicle rear) can be achieved through the sliding adjustment assembly 2, thereby realizing the sliding adjustment function of the vehicle seat, such as the vehicle rear seat. Thus, the space inside the vehicle, especially the space at the rear of the vehicle, can be fully utilized, thereby enhancing riding comfort. In addition, a recess 110 for receiving the seat frame body 1 may be configured in the vehicle body. When the vehicle seat, such as the vehicle rear seat, needs to be flipped into or out of the recess 110, the flipping assembly 3 can assist in manual or electric flipping into/out of the recess, improving the flipping flexibility and operability of the vehicle seat, such as the vehicle rear seat. Preferably, referring to FIG. 1, the sliding adjustment assembly 2 and the flipping assembly 3 are provided on both sides of the bottom part 120 of the seat frame body 1 in the transverse direction to ensure the overall movement and flipping of the entire vehicle seat, such as the vehicle rear seat. The two sets of sliding adjustment assemblies 2 and the two sets of flipping assemblies 3 are arranged in a symmetrical structure. For the sake of brevity, only one side of the sliding adjustment assembly 2 and the flipping assembly 3 will be described below, and the description can be appropriately applied to the other side of the sliding adjustment assembly 2 and the flipping assembly 3.

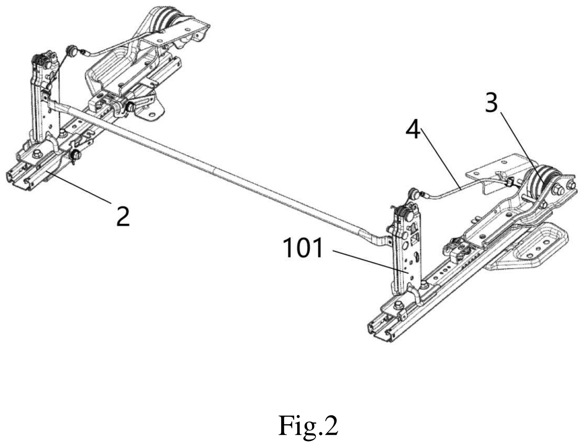

Referring to FIGS. 1 and 2, the vehicle rear seat frame further includes an anti-misoperation assembly 5. The anti-misoperation assembly is mounted on the vehicle body and is connected to the seat frame body 1 and the sliding adjustment assembly 2 in an interlocking manner, such that the seat frame body 1 can be flipped into the recess only at the flipping trigger end of the sliding adjustment assembly 2 through the flipping assembly 3.

Through the arrangement of the anti-misoperation assembly 5, triggering can only be activated when the seat frame body 1 is slid and adjusted to the flipping trigger end of the sliding adjustment assembly 2, ensuring the normal use function of the vehicle rear seat and preventing accidents caused by seat flipping triggered by misoperation.

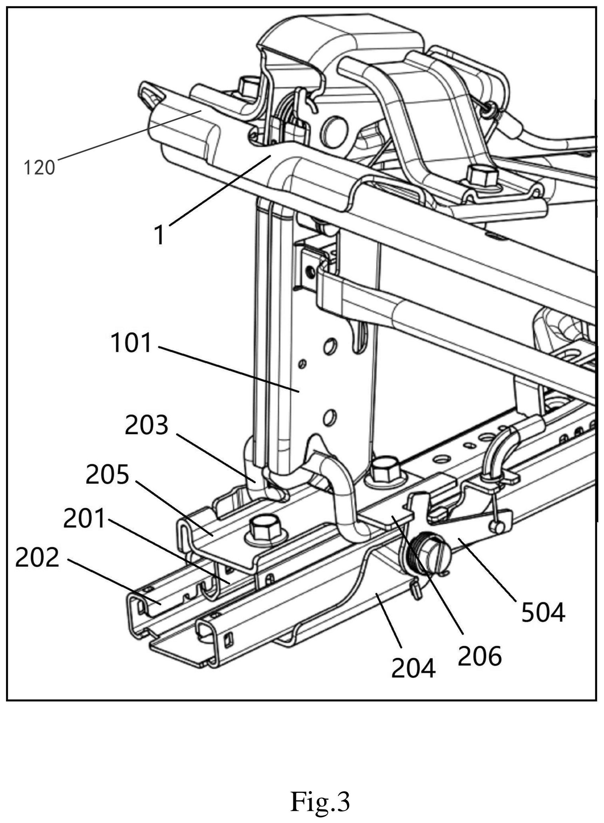

Referring to FIGS. 3, 4, and 20, the sliding adjustment assembly 2 includes an upper slide rail 201 and a lower slide rail 202. The lower slide rail 202 is fixedly mounted on the vehicle body, especially through a lower bracket 204. The upper slide rail 201 is slidably mounted on the lower slide rail 202. The seat frame body 1 is mounted on the upper slide rail 201 through the flipping assembly 3, especially flipably mounted on the upper slide rail 201, so that the seat frame body 1 can slide along the lower slide rail 202 through the upper slide rail 201. In the present application, the upper slide rail 201 and the lower slide rail 202 may be mounted on the vehicle body along the vehicle length direction or the vehicle longitudinal direction.

Preferably, the upper slide rail 201 and the lower slide rail 202 may adopt a slide rail structure with a U-shaped cross-section. The sliding adjustment function of the seat frame body 1 is realized by the sliding of the upper slide rail 201 relative to the lower slide rail 202. A sliding assembly of the prior art may be used between the upper slide rail 201 and the lower slide rail 202 to realize the sliding connection and locking function, thereby ensuring the safe and stable sliding of the seat frame body 1 driven by the upper slide rail 201 along the lower slide rail 202, which will not be described in detail here.

The flipping assembly 3 can be controlled by manual flipping or electric flipping.

Referring to FIG. 4, the flipping assembly 3 controlled by manual flipping includes a lower connecting plate 301, a rear rotating shaft 302, a bidirectional assist mechanism 308 (see FIG. 14), and an upper connecting plate 303. The lower connecting plate 301 is fixedly mounted at the rear of the upper slide rail 201. The upper connecting plate 303 is fixedly mounted at the rear side of the bottom part 120 of the seat frame body 1. The upper connecting plate 303 is rotatably connected to the lower connecting plate 301 through the rear rotating shaft 302 and the bidirectional assist mechanism 308, so that the seat frame body 1 is flipably mounted on the upper slide rail 201 through the rear rotating shaft 302. Here, the bottom part 120 of the seat frame body 1 can be understood as the part of the seat frame body 1 close to the floor of the vehicle passenger compartment in the non-flipped state. The rear side of the bottom part 120 can be understood as the side of the bottom part 120 close to the backrest part 121. The front side of the bottom part 120 can be understood as the side of the bottom part 120 away from the backrest part 121. The transverse direction of the bottom part 120 can be understood as the direction transverse to the rear side and the front side of the bottom part 120.

When the seat frame body 1 is flipped into the recess 110, the rear rotating shaft 302 drives the bidirectional assist mechanism 308 to rotate backward, providing assistance for the backward flipping of the seat frame body 1. Similarly, when the seat frame body 1 is flipped out of the recess 110, the rear rotating shaft 302 drives the bidirectional assist mechanism 308 to rotate forward, providing assistance for the forward flipping of the seat frame body 1. The bidirectional assist mechanism 308 provides assistance for the flipping of the seat frame body 1, making the manual flipping of the seat frame body 1 easier and less labor-intensive. After the seat frame body 1 is flipped into the recess 110, the seat frame body 1 can be hooked by a fixing hook on the vehicle body.

Referring to FIGS. 21, 22, 24, and 25, the flipping assembly 3 controlled by electric flipping includes a lower connecting plate 301, a rear rotating shaft 302, an electric driving member 307, and an upper connecting plate 303. The lower connecting plate 301 is fixedly mounted at the rear of the upper slide rail 201. The upper connecting plate 303 is fixedly mounted at the rear side of the bottom part 120 of the seat frame body 1. The upper connecting plate 303 is rotatably connected to the lower connecting plate 301 through the rear rotating shaft 302 via the electric driving member 307, so that the seat frame body 1 is flipably mounted on the upper slide rail 201 through the rear rotating shaft 302.

When the seat frame body 1 is flipped into the recess 110, the electric driving member 307 is activated, and the output end of the electric driving member 307 drives the upper connecting plate 303 to rotate relative to the lower connecting plate 301 around the rear rotating shaft 302, realizing the flipping function of the seat frame body 1.

Referring to FIGS. 24 and 26 to 28, the electric driving member 307 includes a driving member body 3071, a toothed plate 3072, and a gear 3073. The driving member body 3071 is fixedly mounted on the lower connecting plate 301 through a fixing bracket 30711 via bracket fixing bolts 30712. The gear 3073 is fixedly mounted on the output shaft of the driving member body 3071. The toothed plate 3072 is fixedly connected to the rear rotating shaft 302 through splines. The rear rotating shaft 302 is fixedly mounted on the upper connecting plate 303 through rotating shaft fixing screws 3021. The gear 3073 is meshingly connected to the outer peripheral teeth of the toothed plate 3072.

Preferably, the driving member body 3071 may adopt a motor with forward and reverse rotation functions, and the power and other specifications of the motor can be adaptively selected according to actual rotation requirements. The output shaft of the motor drives the gear 3073 to rotate synchronously. The gear 3073 meshes with the outer peripheral teeth of the transmission toothed plate 3072, making the toothed plate 3072 drive the rear rotating shaft 302 to rotate. The rear rotating shaft 302 drives the upper connecting plate 303 to rotate synchronously, thereby realizing the flipping of the seat frame body 1.

When the output shaft of the motor drives the upper connecting plate 303 to rotate clockwise relative to the lower connecting plate 301 through the rear rotating shaft 302, the function of flipping the seat frame body 1 backward into the recess 110 is realized. When the output shaft of the motor drives the upper connecting plate 303 to rotate counterclockwise relative to the lower connecting plate 301 through the rear rotating shaft 302, the function of flipping the seat frame body 1 forward out of the recess 110 for resetting is realized.

Preferably, the toothed plate 3072 may be arranged between the fixing bracket 30711 and the lower connecting plate 301. A bushing 30713 may be provided between the fixing bracket 30711 and the toothed plate 3072. The output shaft of the driving member body 3071 passes through a reserved hole on the fixing bracket 30711 and the bushing 30713.

Referring to FIG. 27, the toothed plate 3072 has a sector-shaped toothed plate structure with an arc segment. Outer peripheral teeth are distributed on the arc segment of the toothed plate 3072, and the meshing teeth at both ends of the outer peripheral teeth are used as driving stop points 30721.

Continuing to refer to FIG. 27, the driving stop points 30721 at both ends of the outer peripheral teeth can be used to limit the transmission rotation range of the toothed plate 3072. When the gear 3073 meshes with and drives the toothed plate 3072 and rotates to contact any driving stop point 30721, the driving member body 3071 stops rotating. The driving member body 3071 can be controlled to stop when driven to the position of any driving stop point 30721 by arranging, for example, a contact switch or a sensor at the driving stop point 30721, which will not be described in detail here.

Referring to FIGS. 2, 3, and 19, the front side of the bottom part 120 of the seat frame body 1 is flipably mounted with a front foot lock 101 through a foot retracting mechanism 4. The front part of the upper slide rail 201 is fixedly mounted with a latch 203 through an upper bracket 205. In the non-flipped state of the seat frame body 1, the front foot lock 101 can be buckled onto the latch 203 in a matching manner. The anti-misoperation assembly 5 is connected to the front foot lock 101 and the sliding adjustment assembly 2 in an interlocking manner.

When the front foot lock 101 is buckled onto the latch 203, the front foot lock 101 can provide a supporting function for the seat frame body 1. In addition, the front foot lock 101 can provide flipping locking for the seat frame body 1, so it can prevent the flipping of the seat frame body 1, thereby ensuring the normal use of the vehicle rear seat. During the sliding process of the seat frame body 1, since the latch 203 is fixed on the upper slide rail 201, the latch 203 slides synchronously with the seat frame body 1, which can ensure the reliable locking of the seat frame body 1 and thus prevent flipping.

Preferably, referring to FIGS. 10, 11, 15, and 16, a lock catch 1012 with a lock tongue 1021 is provided at the bottom part 120 of the front foot lock 101. The front foot lock 101 is movably connected to the inverted U-shaped latch 203 through the lock catch 1012 to realize the locking and unlocking functions. The locking connection between the front foot lock 101 and the latch 203 can also adopt other locking forms of the prior art, which will not be described in detail here.

In some embodiments, the anti-misoperation assembly 5 is connected to the front foot lock 101 and the sliding adjustment assembly 2 in an interlocking manner. Thus, the front foot lock 101, especially a pair of front foot locks 101, can be unlocked manually through one anti-misoperation assembly 5.

In some embodiments, an unlocking driving assembly 6 may be mounted on the vehicle body, wherein the unlocking driving assembly 6 is connected to the front foot lock 101, especially a pair of front foot locks 101. Thus, the electric unlocking of the front foot lock 101, especially a pair of front foot locks 101, can be realized through one unlocking driving assembly 6, as shown in FIG. 29.

Similar to the sliding adjustment assembly 2 and the flipping assembly 3, the foot retracting mechanism 4 may also adopt two sets of symmetrical arrangements. For the sake of brevity, only one side of the foot retracting mechanism 4 will be described below, and the corresponding description can be appropriately applied to the other side of the foot retracting mechanism 4.

Referring to FIGS. 5 to 7, the foot retracting mechanism 4 includes a winding rotating shaft 401, a foot retracting cable 402, and a cable guide pulley 403. The front foot lock 101 is rotatably mounted on a front foot lock fixing bracket (not shown in the figure) of the seat frame body 1 through a fourth force-accumulating rotating member 102. The cable guide pulley 403 is mounted on the front foot lock fixing bracket of the seat frame body 1, especially through riveting. A first cable fixing point 103 is formed at the upper part of the front foot lock 101. A second cable fixing point 304 is formed on the lower connecting plate 301. The winding rotating shaft 401 is mounted on the lower connecting plate 301 and is coaxially and fixedly connected to the rear rotating shaft 302. The front end of the foot retracting cable 402 is fixedly connected to the first cable fixing point 103 after passing around the cable guide pulley 403. The rear end of the foot retracting cable 402 is fixedly connected to the second cable fixing point 304 after being wound around the winding rotating shaft 401.

When the seat frame body 1 is flipped into the recess 110, that is, when the rear rotating shaft 302 rotates clockwise or backward, the winding rotating shaft 401 rotates synchronously with the rear rotating shaft 302, so that the rear part of the foot retracting cable 402 is wound around the winding rotating shaft 401, thereby pulling the front part of the foot retracting cable 402. Under the guidance of the cable guide pulley 403, the front part of the foot retracting cable 402 pulls the front foot lock 101 to rotate counterclockwise around the fourth force-accumulating rotating member 102 (see FIG. 23), and the front foot lock 101 is retracted into the seat frame body 1.

Preferably, a cavity matching the front foot lock 101 is reserved at a corresponding position in the seat frame body 1 for fully retracting the front foot lock 101, preventing the front foot lock 101 from being exposed, thereby ensuring the flatness of the top of the vehicle rear seat after being flipped into the recess 110 and improving the utilization rate of the rear space of the vehicle.

Preferably, the fourth force-accumulating rotating member 102 may adopt a rotating shaft with a return coil spring. After the vehicle rear seat is flipped into the recess 110, the fourth force-accumulating rotating member 102 accumulates force. When the vehicle rear seat is flipped out of the recess 110, the rear rotating shaft 302 rotates forward, the winding rotating shaft 401 releases the foot retracting cable 402, and under the force-accumulating action of the fourth force-accumulating rotating member 102, the front foot lock 101 rotates clockwise around the fourth force-accumulating rotating member 102, flipping the front foot lock 101 out of, for example, a matching cavity of the seat frame body 1, and realizing the locking between the front foot lock 101 and the latch 203.

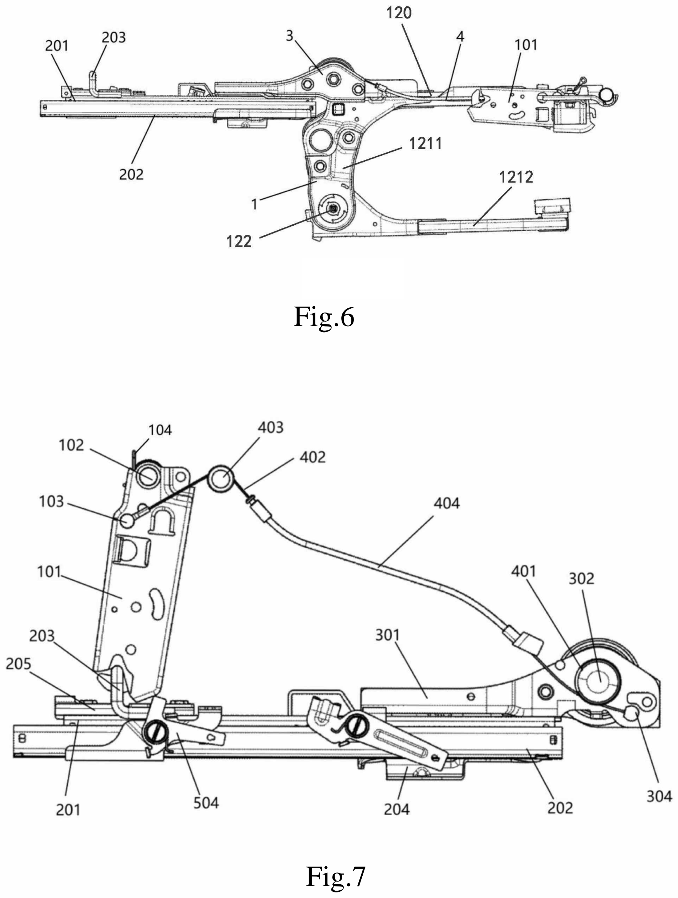

Referring to FIG. 7, the fourth force-accumulating rotating member 102 is located between the cable guide pulley 403 and the first cable fixing point 103, and the fourth force-accumulating rotating member 102, the cable guide pulley 403, and the first cable fixing point 103 form three vertices of a triangle. A return coil spring 104 is mounted on the fourth force-accumulating rotating member 102.

The arrangement of the fourth force-accumulating rotating member 102, the cable guide pulley 403, and the first cable fixing point 103 can make the pulling and flipping angle of the front foot lock 101 by the foot retracting cable 402 larger. The rotation angle of the front foot lock 101 can reach 163° during the entire flipping into the recess 110 process, ensuring that the front foot lock 101 is fully retracted into the seat frame body 1 after being flipped into the recess 110, and ensuring the surface flatness of the seat frame body 1 after being flipped into the recess 110, facilitating the full utilization of the rear space of the vehicle.

Preferably, a cable protective sleeve 404 is sleeved on the foot retracting cable 402, wherein the cable protective sleeve 404 is located between the cable guide pulley 403 and the winding rotating shaft 401. One end of the cable protective sleeve 404 close to the lower connecting plate 301 is mounted on the upper connecting plate 303 through a cable hanging point 4041, as shown in FIG. 25. The foot retracting cable 402 can be protected by the cable protective sleeve 404 to prevent wear of the foot retracting cable 402.

Referring to FIGS. 8, 12a, and 12b, the anti-misoperation assembly 5 includes a handle 501, a handle cable 502, a locking control cable 503, a triggering mechanism 504, a front foot lock unlocking cable 505, and a locking execution mechanism 506. The handle 501 and the locking execution mechanism 506 are respectively fixedly mounted on the vehicle body. The handle cable 502 is connected between the handle 501 and the first cable end 5061 of the locking execution mechanism 506. The triggering mechanism 504 is mounted on the lower bracket 204 of the lower slide rail 202, so that the upper slide rail 201 sliding to the flipping trigger end of the lower slide rail 202 can abut against the triggering mechanism 504. The locking control cable 503 is connected between the second cable end 5062 of the locking execution mechanism 506 and the fourth cable end 5041 of the triggering mechanism 504. A pair of front foot lock unlocking cables 505 are respectively connected between the third cable end 5063 of the locking execution mechanism 506 and the pair of front foot locks 101.

Referring to FIGS. 9 to 11, when the upper slide rail 201 drives the seat frame body 1 to slide to the flipping trigger end of the lower slide rail 202, the upper slide rail 201 abuts against and triggers the triggering mechanism 504, wherein the triggering mechanism 504 unlocks the locking execution mechanism 506 through the locking control cable 503. At this time, the handle 501 can be pulled, the handle 501 pulls the handle cable 502, and the locking execution mechanism 506 pulls the pair of front foot locks 101 to unlock synchronously through the pair of front foot lock unlocking cables 505.

When the upper slide rail 201 is not at the flipping trigger end of the lower slide rail 202, the triggering mechanism 504 is not triggered, and the locking execution mechanism 506 is in a locked state. At this time, the handle cable 502 is tight, and the handle 501 cannot be pulled, thereby realizing the anti-misoperation function. Thus, it is ensured that the seat frame body 1 can only be flipped into the recess 110 when the upper slide rail 201 slides to the flipping trigger end of the lower slide rail 202.

Referring to FIGS. 9 to 11, the triggering mechanism 504 includes a triggering lever 5042 and a first force-accumulating rotating member 5043. The triggering lever 5042 is of an L-shaped structure, and the triggering lever 5042 is rotatably mounted on the lower bracket 204 of the lower slide rail 202 at the bent part of the triggering lever through the first force-accumulating rotating member 5043. One end of the triggering lever 5042 serves as a triggering part 5044 and extends to the side of the upper slide rail 201. A triggering protrusion 206 is formed on the upper bracket 205 of the upper slide rail 201, wherein the triggering protrusion 206 can abut against the triggering part 5044 when the upper slide rail 201 slides to the flipping trigger end of the lower slide rail 202. The other end of the triggering lever 5042 serves as the fourth cable end 5041 and is connected to the locking control cable 503, wherein the middle part of the locking control cable 503 passes through the upper connecting plate 303.

When the upper slide rail 201 slides to the flipping trigger end of the lower slide rail 202, the triggering part 5044 is pressed by the protruding triggering protrusion 206, so that the triggering lever 5042 can rotate clockwise around the first force-accumulating rotating member 5043, thereby making the fourth cable end 5041 at the other end of the triggering lever 5042 pull the locking control cable 503. The locking control cable 503 transmits the action to the locking execution mechanism 506, realizing the unlocking of the locking execution mechanism 506.

When the upper slide rail 201 does not slide to the flipping trigger end of the lower slide rail 202, the triggering protrusion 206 does not contact the triggering part 5044, the locking control cable 503 does not move, and the locking execution mechanism 506 is in a locked state. At this time, as described above, the handle cable 502 is tight, and the handle 501 cannot be pulled, thereby realizing the anti-misoperation function, thus ensuring the normal use of the vehicle rear seat.

Preferably, the first force-accumulating rotating member 5043 may adopt a rotating shaft with a return coil spring. When the triggering lever 5042 can rotate clockwise around the first force-accumulating rotating member 5043, the return coil spring thus accumulates force, which facilitates the subsequent counterclockwise rotation and reset of the triggering lever 5042.

Referring to FIGS. 12a, 12b, and 13, the locking execution mechanism 506 includes an adapter plate 5064, a second force-accumulating rotating member 5065, a rotating baffle 5066, and a third force-accumulating rotating member 5067. The middle part of the adapter plate 5064 is mounted on the mounting plate 5068 of the locking execution mechanism 506 through the second force-accumulating rotating member 5065. One end of the adapter plate 5064 serves as the first cable end 5061 and is connected to the handle cable 502. The other end of the adapter plate 5064 serves as the third cable end 5063 and is connected to the front foot lock unlocking cable 505. A rotating protrusion 5069 is formed on the adapter plate 5064. One end of the rotating baffle 5066 is rotatably mounted on the mounting plate 5068 of the locking execution mechanism 506 through the third force-accumulating rotating member 5067. The other end of the rotating baffle 5066 serves as the second cable end 5062 and is connected to the locking control cable 503. When the upper slide rail 201 is at the non-flipping trigger end of the lower slide rail 202, the rotating protrusion 5069 abuts against the second cable end 5062 which is used to block the rotating protrusion 5069. When the upper slide rail 201 is at the flipping trigger end of the lower slide rail 202, the rotating protrusion 5069 does not contact the second cable end 5062.

Preferably, the flipping trigger end may be located at the end of the lower slide rail 202 (i.e., the end close to the vehicle rear). Alternatively, the flipping trigger end may be set at other positions on the lower slide rail 202 according to actual flipping requirements.

The second cable end 5062 of the rotating baffle 5066 is used to block the rotating protrusion 5069. When the seat frame body 1 slides to the flipping trigger end of the lower slide rail 202, the locking control cable 503 transmits the action to the locking execution mechanism 506. Thus, the second cable end 5062 rotates counterclockwise through the third force-accumulating rotating member 5067 to release the blockage of the rotating protrusion 5069, so that the adapter plate 5064 can rotate counterclockwise around the second force-accumulating rotating member 5065 when the handle cable 502 is pulled, and then the adapter plate 5064 synchronously pulls the pair of front foot locks 101 through the pair of front foot lock unlocking cables 505.

Preferably, the second force-accumulating rotating member 5065 may adopt a rotating shaft with a return coil spring. When the handle cable 502 pulls the adapter plate 5064 to rotate counterclockwise, the return coil spring of the second force-accumulating rotating member 5065 accumulates force, facilitating the clockwise rotation and reset of the adapter plate 5064 when the handle cable 502 is released. The third force-accumulating rotating member 5067 may adopt a rotating shaft with a return tension spring, wherein the return tension spring is connected between the rotating baffle 5066 and the mounting plate 5068. When the rotating baffle 5066 rotates counterclockwise, the third force-accumulating rotating member 5067 accumulates force, facilitating the clockwise rotation and reset of the rotating baffle 5066.

According to actual conditions such as installation space and usage requirements, the structure of the anti-misoperation assembly 5 can also be simplified. The simplified structure of the anti-misoperation assembly 5 is as follows:
Referring to FIG. 30, the anti-misoperation assembly 5 includes a handle 501, a handle cable 502, and a front foot lock unlocking cable 505. The handle 501 is fixedly mounted on the vehicle body. One end of the handle cable 502 is connected to the handle 501. A pair of front foot lock unlocking cables 505 are respectively connected between the other end of the handle cable 502 and the pair of front foot locks 101. When the handle 501 is pulled, the handle cable 502 pulls the front foot lock unlocking cable 505, so that the front foot lock 101 is unlocked.

Referring to FIGS. 31 and 32, to prevent the seat frame body 1 from flipping at the non-recess entry position, a baffle 1014 is provided on the front foot lock 101. A limiting sliding groove 207 is mounted on the vehicle body, and the limiting sliding groove 207 extends above the upper slide rail 201, so that the end of the baffle 1014 can slidably extend into the sliding gap between the limiting sliding groove 207 and the upper slide rail 201, as shown in FIG. 33.

Preferably, the baffle 1014 is of an L-shaped structure and is fixed on the front foot lock 101 through bolts. The limiting sliding groove 207 is of a U-shaped structure, as shown in FIGS. 34 and 35. One end of the limiting sliding groove 207 is fixed on the vehicle body through bolts, and the other end of the limiting sliding groove 207 extends above the upper slide rail 201, thereby forming a sliding gap between the upper slide rail 201 and the other end of the limiting sliding groove 207, and the horizontal section of the baffle 1014 extends into the sliding gap.

Referring to FIG. 31, when the front foot lock 101 slides along the lower slide rail 202 with the vehicle seat, it drives the baffle 1014 to slide synchronously relative to the limiting sliding groove 207. The horizontal section of the baffle 1014 slides in the sliding gap. When the baffle 1014 is located in the sliding gap, the seat frame body 1 is at the non-recess entry position, so that the limiting sliding groove 207 limits the upward rotation of the baffle 1014, and then the front foot lock 101 flips upward, avoiding the accidental flipping of the seat frame body 1.

Referring to FIG. 32, when the seat frame body 1 slides to the recess entry position, the baffle 1014 just slides out of the sliding gap, and the limiting sliding groove 207 no longer blocks the horizontal section of the baffle 1014, so that the front foot lock 101 can be unlocked and flipped into the recess 110 along with the seat frame body 1. According to the sliding range of the seat frame body 1 and its recess entry position, the baffle 1014 and the limiting sliding groove 207 of appropriate length are mounted at corresponding positions to ensure that the limiting sliding groove 207 can perform sliding limiting on the baffle 1014 within the sliding range when not entering the recess.

Referring to FIG. 14, the bidirectional assist mechanism 308 includes a first assist coil spring 305 and a second assist coil spring 306. The inner rings of the first assist coil spring 305 and the second assist coil spring 306 are coaxially mounted on the rear rotating shaft 302. The lower connecting plate 301 includes a lower connecting plate inner side plate 3011 and a lower connecting plate outer side plate 3012. The outer rings of the first assist coil spring 305 and the second assist coil spring 306 are respectively mounted between the lower connecting plate inner side plate 3011 and the lower connecting plate outer side plate 3012 at intervals through spring hanging bolts 3013 via sound insulation pads 3014, and the mounting directions of the first assist coil spring 305 and the second assist coil spring 306 are opposite.

Preferably, two first assist coil springs 305 may be provided, and they may be located on both sides of the second assist coil spring 306. Since the first assist coil spring 305 and the second assist coil spring 306 are mounted on the rear rotating shaft 302 in opposite directions, when the rear rotating shaft 302 rotates backward or clockwise, the first assist coil spring 305 generates torque to assist the seat frame body 1 in flipping into the recess 110. When the rear rotating shaft 302 rotates forward or counterclockwise, the second assist coil spring 306 generates torque to assist the seat frame body 1 in flipping out of the recess 110.

Referring to FIG. 29, the unlocking driving assembly 6 includes an unlocking driving member 601 and an electric unlocking cable 602. The unlocking driving member 601 is mounted on the vehicle body. One end of each of the pair of electric unlocking cables 602 is respectively connected to the pair of front foot locks 101, wherein the other end of the pair of electric unlocking cables 602 is connected to the unlocking driving member 601.

Preferably, the unlocking driving member 601 may adopt a motor with forward and reverse rotation functions, wherein the power and other specifications of the motor can be adaptively selected according to actual usage requirements. When the motor is started to rotate forward, it pulls the pair of electric unlocking cables 602. The pair of electric unlocking cables 602 transmits the pulling action to the pair of front foot locks 101, realizing the synchronous unlocking of the pair of front foot locks 101. When the motor is started to rotate reversely, it releases the pair of electric unlocking cables 602, enabling the pair of front foot locks 101 to be buckled and locked on the latch 203.

By electrically controlling the unlocking of the pair of front foot locks 101 through the motor, the start and stop of the motor can be used to prevent the mis-triggering of the flipping of the seat frame body 1, resulting in higher control precision and safety.

Referring to FIGS. 10, 15, and 16, the front foot lock 101 may adopt a conventional seat foot lock structure in the field, which usually includes a foot lock 1011, a lock catch 1012, and a sector-shaped stop block 1013. The lock catch 1012 is connected to the sector-shaped stop block 1013 through arc surface transmission. The electric unlocking cable 602 or the front foot lock unlocking cable 505 pulls the sector-shaped stop block 1013 to rotate. When the sector-shaped stop block 1013 rotates, it drives the lock catch 1012 to rotate, making the lock tongue 1021 of the lock catch 1012 buckled and locked with or separated and unlocked from the latch 203.

Referring to FIGS. 31 to 35, a baffle 1014 may also be mounted on the electrically controlled front foot lock 101. A limiting sliding groove 207 is mounted on the vehicle body, and the limiting sliding groove 207 extends above the upper slide rail 201, so that the end of the baffle 1014 can slidably extend into the sliding gap between the limiting sliding groove 207 and the upper slide rail 201.

The structure and working principle of the baffle 1014 and the limiting sliding groove 207 in the electrically controlled vehicle seat flipping structure are the same as the baffle 1014 and the limiting sliding groove 207 in the manually controlled vehicle seat flipping structure, which will not be described in detail here.

Referring to FIGS. 1 to 29, the usage method and working principle of the present application are as follows:
When the vehicle rear seat is in the normal use state, the front part of the seat frame body 1 is buckled and locked on the latch 203 through the front foot lock 101, and the upper slide rail 201 and the lower slide rail 202 are locked through a slide rail assembly of the prior art to ensure the stability of the vehicle rear seat.

When the vehicle rear seat needs to be adjusted forward and backward relative to the vehicle body, since the front end of the seat frame body 1 is mounted on the front part of the upper slide rail 201 through the front foot lock 101 via the latch 203, and the rear end of the seat frame body 1 is mounted on the rear part of the upper slide rail 201 through the flipping assembly 3, so that the seat frame body 1 can slide along the lower slide rail 202 through the upper slide rail 201, thereby realizing the sliding adjustment function of the vehicle rear seat. After the rear seat is slid and adjusted in place, it can be locked through a slide rail assembly of the prior art, and the locking method of the vehicle rear seat will not be described in detail here.

### Manual Flipping Operation Method of the Vehicle Rear Seat:

When the vehicle rear seat needs to be flipped into the recess 110, the upper slide rail 201 drives the seat frame body 1 to slide from the front end of the lower slide rail 202 to the flipping trigger end of the lower slide rail 202.

When the upper slide rail 201 slides to the flipping trigger end of the lower slide rail 202, under the action of the first force-accumulating rotating member 5043, the triggering part 5044 of the triggering lever 5042 extends upward, so that the triggering protrusion 206 presses the triggering part 5044, making the triggering lever 5042 rotate clockwise through the first force-accumulating rotating member 5043, and the triggering part 5044 is pressed downward. At the same time, the fourth cable end 5041 at the other end of the triggering lever 5042 rotates downward and pulls the locking control cable 503 to move downward synchronously, thereby realizing the triggering of the flipping function of the seat frame body 1.

After the locking control cable 503 is pulled, it transmits the action to the locking execution mechanism 506. Specifically, the locking control cable 503 synchronously pulls the second cable end 5062 of the rotating baffle 5066, making the rotating baffle 5066 rotate counterclockwise through the third force-accumulating rotating member 5067, and releasing the blockage of the rotating protrusion 5069 by the second cable end 5062. At this time, the handle 501 can be pulled to tighten the handle cable 502, so that the adapter plate 5064 can rotate counterclockwise through the second force-accumulating rotating member 5065, thereby pulling the pair of front foot lock unlocking cables 505 and the handle cable 502 at the same time, making the pair of front foot lock unlocking cables 505 tight and pulling the pair of front foot locks 101 to unlock from the latch 203 synchronously, meeting the flipping function of the vehicle rear seat.

When the upper slide rail 201 does not slide to the flipping trigger end of the lower slide rail 202, the triggering protrusion 206 does not contact the triggering part 5044, the locking control cable 503 is loose, and under the force-accumulating action of the third force-accumulating rotating member 5067, the rotating baffle 5066 rotates clockwise to the lowest position, making the second cable end 5062 block the rotating protrusion 5069, preventing the adapter plate 5064 from rotating. The handle cable 502 is tight between the handle 501 and the adapter plate 5064, ensuring that the handle 501 cannot be pulled. At this time, the vehicle rear seat cannot be flipped, realizing the anti-misoperation function.

When the vehicle rear seat is flipped, the seat frame body 1 flips backward through the rear rotating shaft 302. The rear rotating shaft 302 drives the inner ring of the first assist coil spring 305 to rotate, generating assisting torque to assist the manual flipping into the recess 110 of the seat frame body 1. The seat frame body 1 flips forward out of the recess 110 through the rear rotating shaft 302. The rear rotating shaft 302 drives the inner ring of the second assist coil spring 306 to rotate, generating assisting torque to assist the manual flipping out of the recess 110 of the seat frame body 1.

### Electric Flipping Operation Method of the Vehicle Rear Seat:

The unlocking driving member 601 is activated and pulls the pair of electric unlocking cables 602. The pair of electric unlocking cables 602 pulls the pair of front foot locks 101 to unlock synchronously from the latch 203.

The electric driving member 307 is activated and drives the gear 3073 to rotate counterclockwise through the output shaft, making the gear 3073 drive the toothed plate 3072 to rotate clockwise. The toothed plate 3072 drives the upper connecting plate 303 to rotate clockwise synchronously through the rear rotating shaft 302, thereby driving the seat frame body 1 to flip backward into the recess 110. The entire reversing process is shown in FIG. 23.

The electric driving member 307 is activated and drives the gear 3073 to rotate clockwise through the output shaft, making the gear 3073 drive the toothed plate 3072 to rotate counterclockwise. The toothed plate 3072 drives the upper connecting plate 303 to rotate counterclockwise synchronously through the rear rotating shaft 302, thereby driving the seat frame body 1 to flip forward out of the recess 110.

The unlocking driving member 601 is activated and releases the pair of electric unlocking cables 602, enabling the pair of front foot locks 101 to be respectively locked on the latch 203.

The present application has been described in detail above with reference to the accompanying drawings and embodiments. Those of ordinary skill in the art can make various modifications to the present application according to the above description. Therefore, certain details in the embodiments should not constitute limitations on the present application, and the present application will take the scope defined by the appended claims as the protection scope of the present application.

It should be noted that the terms used herein are only for the purpose of describing specific aspects and are not intended to limit the disclosure. As used herein, the singular forms "a" and "the one" shall include the plural forms unless the context clearly indicates otherwise. It should be understood that the terms "comprising" and "including" and other similar terms, when used in the application documents, specifically indicate the existence of the stated operations, elements and/or components, and do not exclude the existence or addition of one or more other operations, elements, components and/or combinations thereof. As used herein, the term "and/or" includes all arbitrary combinations of one or more related listed items. In the description of the accompanying drawings, similar reference numerals always indicate similar elements.

The thickness of elements in the accompanying drawings may be exaggerated for clarity. In addition, it should be understood that if an element is referred to as being "on", "coupled to" or "connected to" another element, the element may be directly formed on, coupled to or connected to the other element, or there may be one or more intermediate elements between them. On the contrary, if the expressions "directly on...", "directly coupled to..." and "directly connected to..." are used herein, it means that there are no intermediate elements. Other words used to describe the relationship between elements should be interpreted similarly, such as "between" and "directly between", "attached" and "directly attached", "adjacent" and "directly adjacent", etc.

Terms such as "top", "bottom", "above", "below", "upper", "lower" and the like are used herein to describe the relationship of one element, layer or region relative to another element, layer or region as shown in the accompanying drawings. It should be understood that these terms should also include other orientations of the device in addition to the orientation described in the accompanying drawings.

It should be understood that although the terms "first", "second", etc. may be used herein to describe different elements, these elements should not be limited by these terms. These terms are only used to distinguish one element from another. Therefore, a first element may be referred to as a second element without departing from the teachings of the inventive concept of the present application.

It is also contemplated that all exemplary embodiments disclosed herein may be combined with each other in any manner. Finally, it should be noted that the above embodiments are only used to understand the present application and do not limit the protection scope of the present application. For those skilled in the art, modifications can be made on the basis of the above embodiments, and these modifications do not depart from the protection scope of the present application.

## Claims

1. A vehicle seat frame, in particular a vehicle rear seat frame, **characterized by** comprising a seat frame body, a sliding adjustment assembly and a flipping assembly; wherein the sliding adjustment assembly is mounted on a vehicle body, wherein the seat frame body is mounted on the sliding adjustment assembly via the flipping assembly, so that the seat frame body is slidably and flipably mounted on the vehicle body.

2. The vehicle seat frame according to claim 1, **characterized in that** the sliding adjustment assembly comprises an upper slide rail and a lower slide rail; wherein the lower slide rail is mounted on the vehicle body, wherein the upper slide rail is slidably mounted on the lower slide rail; wherein the seat frame body is mounted on the upper slide rail via the flipping assembly, enabling the seat frame body to slide along the lower slide rail through the upper slide rail.

3. The vehicle seat frame according to claim 2, **characterized in that** the flipping assembly comprises a lower connecting plate, a rear rotating shaft and an upper connecting plate; wherein the lower connecting plate is fixedly mounted on the upper slide rail, wherein the upper connecting plate is fixedly mounted at the bottom of the seat frame body, wherein the upper connecting plate is rotatably connected to the lower connecting plate via the rear rotating shaft, so that the seat frame body is flipably mounted on the upper slide rail through the flipping assembly.

4. The vehicle seat frame according to claim 3, **characterized in that** the flipping assembly further comprises an electric driving member, wherein the upper connecting plate is rotatably connected to the lower connecting plate through the rear rotating shaft via the electric driving member.

5. The vehicle seat frame according to claim 4, **characterized in that** the electric driving member comprises a driving member body, a toothed plate and a gear; wherein the driving member body is fixedly mounted on the lower connecting plate, wherein the gear is fixedly mounted on an output shaft of the driving member body; wherein the toothed plate is fixedly connected to the rear rotating shaft, wherein the rear rotating shaft is fixedly mounted on the upper connecting plate, wherein the gear is meshingly connected to the toothed plate.

6. The vehicle seat frame according to claim 5, **characterized in that** the toothed plate is of a sector-shaped toothed plate structure, wherein the sector-shaped toothed plate structure has an arc segment, wherein outer peripheral teeth are distributed on the arc segment, wherein the meshing teeth of the outer peripheral teeth located at both ends thereof are used as driving stop points.

7. The vehicle seat frame according to claim 3, **characterized in that** the flipping assembly further comprises a bidirectional assist mechanism, wherein the upper connecting plate is rotatably connected to the lower connecting plate through the rear rotating shaft via the bidirectional assist mechanism.

8. The vehicle seat frame according to claim 7, **characterized in that** the bidirectional assist mechanism comprises a first assist coil spring and a second assist coil spring, wherein the first assist coil spring and the second assist coil spring are mounted on the rear rotating shaft in opposite directions, such that when the rear rotating shaft rotates clockwise, the first assist coil spring generates torque to assist the flipping of the seat frame body into a recess; and when the rear rotating shaft rotates counterclockwise, the second assist coil spring generates torque to assist the flipping of the seat frame body out of the recess.

9. The vehicle seat frame according to claim 8, **characterized in that** inner rings of the first assist coil spring and the second assist coil spring are coaxially mounted on the rear rotating shaft; wherein the lower connecting plate comprises a lower connecting plate inner side plate and a lower connecting plate outer side plate, wherein outer rings of the first assist coil spring and the second assist coil spring are respectively mounted at intervals between the lower connecting plate inner side plate and the lower connecting plate outer side plate.

10. The vehicle seat frame according to claim 2, **characterized in that** a front foot lock is mounted on the front side of the bottom of the seat frame body, wherein a latch is fixedly mounted on the front part of the upper slide rail, wherein the front foot lock can be buckled onto the latch in a matching manner when the seat frame body is in a non-flipped state.

11. The vehicle seat frame according to claim 10, **characterized in that** the front foot lock is rotatably mounted on the seat frame body via a fourth force-accumulating rotating member, and can be flipped relative to the seat frame body around the fourth force-accumulating rotating member via a foot retracting mechanism.

12. The vehicle seat frame according to claim 11, **characterized in that** the foot retracting mechanism comprises a winding rotating shaft, a foot retracting cable and a cable guide pulley; wherein the cable guide pulley is mounted on the seat frame body; wherein a first cable fixing point is formed on the upper part of the front foot lock, wherein a second cable fixing point is formed on the lower connecting plate, wherein the winding rotating shaft is mounted on the lower connecting plate and fixedly connected coaxially to the rear rotating shaft; wherein a front end of the foot retracting cable is fixedly connected to the first cable fixing point after passing around the cable guide pulley, wherein a rear end of the foot retracting cable is fixedly connected to the second cable fixing point after being wound around the winding rotating shaft.

13. The vehicle seat frame according to claim 12, **characterized in that** the fourth force-accumulating rotating member is located between the cable guide pulley and the first cable fixing point, and wherein the fourth force-accumulating rotating member, the cable guide pulley and the first cable fixing point form three vertices of a triangle.

14. The vehicle seat frame according to claim 10, **characterized in that** the vehicle seat frame further comprises an anti-misoperation assembly, which is connected to the seat frame body and the sliding adjustment assembly in an interlocking manner, such that the seat frame body can be flipped into the recess via the flipping assembly only at a flipping trigger end of the sliding adjustment assembly.

15. The vehicle seat frame according to claim 14, **characterized in that** the anti-misoperation assembly comprises a handle, a handle cable and a front foot lock unlocking cable; wherein the handle is fixedly mounted on the vehicle body, wherein one end of the handle cable is connected to the handle, wherein the front foot lock unlocking cable is connected between the other end of the handle cable and the front foot lock.

16. The vehicle seat frame according to claim 15, **characterized in that** the anti-misoperation assembly further comprises a locking control cable, a triggering mechanism and a locking execution mechanism; wherein the handle cable is connected between the handle and a first cable end of the locking execution mechanism; wherein the triggering mechanism is mounted on the lower slide rail, enabling the upper slide rail sliding to the flipping trigger end of the lower slide rail to abut against the triggering mechanism, wherein the locking control cable is connected between a second cable end of the locking execution mechanism and a fourth cable end of the triggering mechanism; wherein the front foot lock unlocking cable is connected between a third cable end of the locking execution mechanism and the front foot lock.

17. The vehicle seat frame according to claim 16, **characterized in that** the triggering mechanism comprises a triggering lever and a first force-accumulating rotating member; wherein the triggering lever is rotatably mounted on the lower slide rail via the first force-accumulating rotating member; wherein one end of the triggering lever serves as a triggering part and extends to the side of the upper slide rail, wherein a triggering protrusion is formed on the upper slide rail, wherein the triggering protrusion can abut against the triggering part when the upper slide rail slides to the flipping trigger end of the lower slide rail; wherein the other end of the triggering lever serves as the fourth cable end and is connected to the locking control cable.

18. The vehicle seat frame according to claim 16, **characterized in that** the locking execution mechanism comprises an adapter plate, a second force-accumulating rotating member, a rotating baffle and a third force-accumulating rotating member; wherein the middle part of the adapter plate is mounted on the locking execution mechanism via the second force-accumulating rotating member, wherein one end of the adapter plate serves as the first cable end and is connected to the handle cable, wherein the other end of the adapter plate serves as the third cable end and is connected to the front foot lock unlocking cable, wherein a rotating protrusion is formed on the adapter plate; wherein one end of the rotating baffle is rotatably mounted on the locking execution mechanism via the third force-accumulating rotating member, wherein the other end of the rotating baffle serves as the second cable end and is connected to the locking control cable.

19. The vehicle seat frame according to claim 18, **characterized in that** when the upper slide rail is located at a non-flipping trigger end of the lower slide rail, the rotating protrusion abuts against the second cable end which forms a stop for it, and wherein when the upper slide rail is located at the flipping trigger end of the lower slide rail, the rotating protrusion is not in contact with the second cable end.

20. The vehicle seat frame according to any one of claims 14 to 19, **characterized in that** the flipping trigger end is an end of the lower slide rail close to the rear of the vehicle.

21. The vehicle seat frame according to claim 10, **characterized in that** an unlocking driving assembly is mounted on the vehicle body, wherein the unlocking driving assembly is connected to the front foot lock for electrically unlocking the front foot lock.

22. The vehicle seat frame according to claim 21, **characterized in that** the unlocking driving assembly comprises an unlocking driving member and an electric unlocking cable; wherein one end of the electric unlocking cable is connected to the front foot lock, wherein the other end of the electric unlocking cable is connected to the unlocking driving member.

23. The vehicle seat frame according to claim 22, **characterized in that** the unlocking driving member is configured as a motor with forward and reverse rotation functions, wherein when the motor is started to rotate forward, it pulls the electric unlocking cable, which transmits the pulling action to the front foot lock, thereby realizing the unlocking of the front foot lock; and wherein when the motor is started to rotate reversely, it releases the electric unlocking cable, thereby buckling and locking the front foot lock to the latch.

24. The vehicle seat frame according to any one of claims 10 to 19, **characterized in that** a baffle is provided on the front foot lock, wherein a limiting sliding groove is mounted on the vehicle body, wherein the limiting sliding groove extends above the upper slide rail, enabling an end of the baffle to slidably extend into a sliding gap between the limiting sliding groove and the upper slide rail.

25. A vehicle, **characterized by** comprising the vehicle seat frame according to any one of claims 1 to 24.
